# EUROPEAN PATENT APPLICATION

(11) **EP 4 765 783 A1**
(43) Date of publication of application: **24.06.2026**
(21) Application number: 24864504.6
(22) Date of filing: 03.09.2024
(51) Int. Cl.: H04L 67/561

(54) **INTENT CAPABILITY MANAGEMENT METHOD, APPARATUS AND SYSTEM, AND STORAGE MEDIUM**

(30) Priority: 12.09.2023 CN 202311171803
(71) Applicant: HUAWEI TECHNOLOGIES CO., LTD., Shenzhen, Guangdong 518129 (CN)
(72) Inventor: YUAN, Yue, Shenzhen, Guangdong 518129 (CN); WANG, Dong, Shenzhen, Guangdong 518129 (CN); LI, Shitao, Shenzhen, Guangdong 518129 (CN); XIA, Haiguang, Shenzhen, Guangdong 518129 (CN)
(74) Representative: Gill Jennings & Every LLP
(86) International application number: PCT/CN2024/116616
(87) International publication number: WO 2025/055782

(57) **Abstract**

An intent capability management method, apparatus, and system, and a storage medium are provided. An intent requester subscribes to intent capability description information of a target intent producer at a service-related network layer from an intent catalog based on a received intent request, and sends a first call indication to the target intent producer at the network layer, where the first call indication indicates to call the target intent producer at the network layer. The target intent producer at the network layer subscribes to intent capability description information of a target intent producer at a service-related element layer from the intent catalog based on the first call indication, and calls at least one target intent producer at the element layer. In addition, the at least one target intent producer at the element layer configures, based on a call indication, a network element related to a first service. In this way, intent function processing corresponding to a version of a product from a vendor can be automatically and flexibly discovered and triggered based on intentions of different users.

## Description

This application claims priority to Chinese Patent Application No. 202311171803.9, filed with the China National Intellectual Property Administration on September 12, 2023 and entitled "INTENT CAPABILITY MANAGEMENT METHOD, APPARATUS, AND SYSTEM, AND STORAGE MEDIUM", which is incorporated herein by reference in its entirety.

### TECHNICAL FIELD

This application relates to the field of communication technologies, and in particular, to an intent capability management method, apparatus, and system, and a storage medium.

### BACKGROUND

An intent-driven network technology can cope with challenges brought by network technology evolution, rapid service development, and complex operation and maintenance management. An intent-driven network focuses on expected results of network services and decouples expectations for a system from specific implementation details. The intent-driven network can automatically translate, verify, activate, and guarantee intents of an operator, to achieve a target network form and ensure network reliability. Through intent-driven interaction, users/operators express their service expectations and service objectives in a declarative manner, instead of describing "how to" achieve these expectations and objectives. This simplifies human-machine interaction, reduces manual operations of internal network management personnel, and lowers a usage threshold for external industry application customers.

However, in a currently proposed mechanism for registering and discovering intent capability description information, the intent capability description information has not been defined based on a scenario, and how to decompose a complex intent is not defined in detail currently.

### SUMMARY

This application provides an intent capability management method, apparatus, and system, and a storage medium, to automatically and flexibly discover and trigger intent function processing corresponding to a version of a product from a vendor based on intentions of different users.

According to a first aspect, an intent capability management method is provided. The method is performed by an intent catalog or a circuit or a chip used for the intent catalog.

The method includes: receiving a subscription request from an intent requester or an intent producer at a network layer, where the subscription request is used to subscribe to intent capability description information of a target intent producer at a network layer or an element layer related to a first service; and sending a subscription response to the intent requester or the intent producer at the network layer, where the subscription response includes the intent capability description information of the target intent producer at the network layer or the element layer.

In this aspect, the intent requester subscribes to the intent capability description information of the target intent producer at the service-related network layer from the intent catalog based on a received intent request, and sends a first call indication to the target intent producer at the network layer, where the first call indication indicates to call the target intent producer at the network layer. The target intent producer at the network layer subscribes to the intent capability description information of the target intent producer at the service-related element layer from the intent catalog based on the first call indication, and calls at least one target intent producer at the element layer. In addition, the at least one target intent producer at the element layer configures, based on a call indication, a network element related to the first service. In this way, intent function processing corresponding to a version of a product from a vendor can be automatically and flexibly discovered and triggered based on intentions of different users.

In a possible implementation, the method further includes: receiving an intent registration request from at least one intent producer at the network layer or the element layer, where the intent registration request includes intent capability description information of the at least one intent producer at the network layer or the element layer; and sending an intent registration response to the at least one intent producer at the network layer or the element layer.

In this implementation, the at least one intent producer at the network layer or the element layer registers its intent capability description information with the intent catalog in advance, so that when receiving an intent request from the intent requester, the intent catalog can call a corresponding intent producer at the network layer or the element layer to execute an intent function.

In another possible implementation, the method further includes: receiving an update request from the target intent producer at the element layer, where the update request is used to request to update the intent capability description information of the target intent producer at the network layer or the element layer; and sending an update response to the target intent producer at the element layer.

In this implementation, in a process of executing an intent, after determining that the intent capability description information at the element layer is updated, the target intent producer at the element layer sends the update request to the intent catalog in a timely manner, so that the intent requester and the intent producer at the network layer can obtain updated intent capability description information of the target intent producer at the element layer in a timely manner, thereby improving model capability management efficiency.

In still another possible implementation, the method further includes: sending a subscription update notification to the intent requester or the intent producer at the network layer, where the subscription update notification includes updated intent capability description information of the target intent producer at the network layer or the element layer.

In still another possible implementation, the intent capability description information includes at least one of the following: an intent handler role, a processing capability of an intent function, a status of an intent function module, a transmission format of an intent information model, a format of the intent information model, an intent interface type, an access address of the intent function module, an intent function layer, a supported domain, a name of the intent function, metadata of the intent function, the intent information model, an intent input, and an intent output.

According to a second aspect, an intent capability management method is provided. The method is performed by an intent requester or a circuit or a chip used for the intent requester.

The method includes: receiving an intent request, where the intent request includes a first intention, and the first intention is a request for performing a first service; sending a subscription request to an intent catalog, where the subscription request is used to subscribe to intent capability description information of a target intent producer at a network layer related to the first service; receiving a subscription response, where the subscription response includes the intent capability description information of the target intent producer at the network layer; and sending a first call indication to the target intent producer at the network layer, where the first call indication indicates to call the target intent producer at the network layer.

In this aspect, the intent requester subscribes to the intent capability description information of the target intent producer at the service-related network layer from the intent catalog based on the received intent request, and sends the first call indication to the target intent producer at the network layer, where the first call indication indicates to call the target intent producer at the network layer. The target intent producer at the network layer subscribes to intent capability description information of a target intent producer at a service-related element layer from the intent catalog based on the first call indication, and calls at least one target intent producer at the element layer. In addition, the at least one target intent producer at the element layer configures, based on a call indication, a network element related to the first service. In this way, intent function processing corresponding to a version of a product from a vendor can be automatically and flexibly discovered and triggered based on intentions of different users.

In a possible implementation, the intent capability description information includes at least one of the following: an intent handler role, a processing capability of an intent function, a status of an intent function module, a transmission format of an intent information model, a format of the intent information model, an intent interface type, an access address of the intent function module, an intent function layer, a supported domain, a name of the intent function, metadata of the intent function, the intent information model, an intent input, and an intent output.

According to a third aspect, an intent capability management method is provided. The method is performed by a target intent producer at a network layer or a circuit or a chip used for the target intent producer at the network layer.

The method includes: receiving a first call indication from an intent requester, where the first call indication indicates to call the target intent producer at the network layer related to a first service; sending a subscription request to an intent catalog based on the first call indication, where the subscription request is used to subscribe to intent capability description information of at least one target intent producer at an element layer related to the first service; receiving a subscription response from the intent catalog, where the subscription response includes the intent capability description information of the at least one target intent producer at the element layer; and sending a second call indication to the at least one target intent producer at the element layer, where the second call indication indicates to call the at least one target intent producer at the element layer.

In this aspect, the intent requester subscribes to intent capability description information of the target intent producer at the service-related network layer from the intent catalog based on a received intent request, and sends the first call indication to the target intent producer at the network layer, where the first call indication indicates to call the target intent producer at the network layer. The target intent producer at the network layer subscribes to the intent capability description information of the target intent producer at the service-related element layer from the intent catalog based on the first call indication, and calls the at least one target intent producer at the element layer. In addition, the at least one target intent producer at the element layer configures, based on the call indication, a network element related to the first service. In this way, intent function processing corresponding to a version of a product from a vendor can be automatically and flexibly discovered and triggered based on intentions of different users.

In a possible implementation, the method further includes: sending an intent registration request to the intent catalog, where the intent registration request includes intent capability description information of the target intent producer at the network layer; and receiving an intent registration response from the intent catalog.

In this implementation, at least one intent producer at the network layer registers its intent capability description information with the intent catalog in advance, so that when receiving an intent request from the intent requester, the intent catalog can call a corresponding intent producer at the network layer or the element layer to execute an intent function.

In another possible implementation, the method further includes: receiving a subscription update notification from the intent catalog, where the subscription update notification includes updated intent capability description information of the target intent producer at the element layer.

In this implementation, in a process of executing an intent, after determining that the intent capability description information at the element layer is updated, the target intent producer at the element layer sends an update request to the intent catalog in a timely manner, so that the intent producer at the network layer can obtain the updated intent capability description information of the target intent producer at the element layer in a timely manner, thereby improving model capability management efficiency.

In still another possible implementation, the intent capability description information includes at least one of the following: an intent handler role, a processing capability of an intent function, a status of an intent function module, a transmission format of an intent information model, a format of the intent information model, an intent interface type, an access address of the intent function module, an intent function layer, a supported domain, a name of the intent function, metadata of the intent function, the intent information model, an intent input, and an intent output.

According to a fourth aspect, an intent capability management method is provided. The method is performed by at least one target intent producer at an element layer or a circuit or a chip used for the at least one target intent producer at the element layer.

The method includes: receiving a second call indication from an intent producer at a network layer, where the second call indication indicates to call the at least one target intent producer at the element layer; and configuring, based on the second call indication, a network element related to a first service.

In this aspect, the at least one target intent producer at the element layer configures, based on the call indication, the network element related to the first service. In this way, intent function processing corresponding to a version of a product from a vendor can be automatically and flexibly discovered and triggered based on intentions of different users.

In a possible implementation, the method further includes: sending an intent registration request to an intent catalog, where the intent registration request includes intent capability description information of the target intent producer at the element layer; and receiving an intent registration response from the intent catalog.

In this implementation, the at least one intent producer at the element layer registers its intent capability description information with the intent catalog in advance, so that when receiving an intent request from an intent requester, the intent catalog can call a corresponding intent producer at the network layer or the element layer to execute an intent function.

In another possible implementation, the method further includes: determining that intent capability description information of a network element is updated; sending an update request to the intent catalog, where the update request is used to request to update the intent capability description information of the target intent producer at the element layer; and receiving an update response from the intent catalog.

In this implementation, in this implementation, in a process of executing an intent, after determining that the intent capability description information at the element layer is updated, the target intent producer at the element layer sends the update request to the intent catalog in a timely manner, so that the intent requester and the intent producer at the network layer can obtain updated intent capability description information of the target intent producer at the element layer in a timely manner, thereby improving model capability management efficiency.

In still another possible implementation, the intent capability description information includes at least one of the following: an intent handler role, a processing capability of an intent function, a status of an intent function module, a transmission format of an intent information model, a format of the intent information model, an intent interface type, an access address of the intent function module, an intent function layer, a supported domain, a name of the intent function, metadata of the intent function, the intent information model, an intent input, and an intent output.

According to a fifth aspect, an intent capability management method is provided. The method is performed by an intent capability management system. The intent capability management system includes an intent requester, an intent catalog, a target intent producer at a network layer, and at least one target intent producer at an element layer.

The method includes: The intent requester receives an intent request, where the intent request includes a first intention, and the first intention is a request for performing a first service; the intent requester sends a first subscription request to the intent catalog, where the first subscription request is used to subscribe to intent capability description information of a target intent producer at a network layer related to the first service; the intent catalog sends a first subscription response to the intent requester, where the first subscription response includes the intent capability description information of the target intent producer at the network layer; the intent requester sends a first call indication to the target intent producer at the network layer, where the first call indication indicates to call the target intent producer at the network layer; the target intent producer at the network layer sends a second subscription request to the intent catalog based on the first call indication, where the second subscription request is used to subscribe to intent capability description information of at least one target intent producer at an element layer related to the first service; the intent catalog sends a second subscription response to the intent producer at the network layer, where the second subscription response includes the intent capability description information of the at least one target intent producer at the element layer; the intent producer at the network layer sends a second call indication to the at least one target intent producer at the element layer, where the second call indication indicates to call the at least one target intent producer at the element layer; and the at least one target intent producer at the element layer configures, based on the second call indication, a network element related to the first service.

According to a sixth aspect, an intent capability management apparatus is provided, to implement the method in any one of the first aspect or the implementations of the first aspect. For example, the apparatus may be a chip or a circuit. The foregoing method may be implemented by software, hardware, or hardware executing corresponding software.

In a possible implementation, the apparatus includes a transceiver unit, and may further include a processing unit. The transceiver unit is configured to receive a subscription request from an intent requester or an intent producer at a network layer, where the subscription request is used to subscribe to intent capability description information of a target intent producer at a network layer or an element layer related to a first service. The transceiver unit is further configured to send a subscription response to the intent requester or the intent producer at the network layer, where the subscription response includes the intent capability description information of the target intent producer at the network layer or the element layer.

Optionally, the transceiver unit is further configured to receive an intent registration request from at least one intent producer at the network layer or the element layer, where the intent registration request includes intent capability description information of the at least one intent producer at the network layer or the element layer. The transceiver unit is further configured to send an intent registration response to the at least one intent producer at the network layer or the element layer.

Optionally, the transceiver unit is further configured to receive an update request from the target intent producer at the element layer, where the update request is used to request to update the intent capability description information of the target intent producer at the network layer or the element layer. The transceiver unit is further configured to send an update response to the target intent producer at the element layer.

Optionally, the transceiver unit is further configured to send a subscription update notification to the intent requester or the intent producer at the network layer, where the subscription update notification includes updated intent capability description information of the target intent producer at the network layer or the element layer.

Optionally, the intent capability description information includes at least one of the following: an intent handler role, a processing capability of an intent function, a status of an intent function module, a transmission format of an intent information model, a format of the intent information model, an intent interface type, an access address of the intent function module, an intent function layer, a supported domain, a name of the intent function, metadata of the intent function, the intent information model, an intent input, and an intent output.

According to a seventh aspect, an intent capability management apparatus is provided, to implement the method in any one of the second aspect or the implementations of the second aspect. For example, the apparatus may be a chip or a circuit. The foregoing method may be implemented by software, hardware, or hardware executing corresponding software.

In a possible implementation, the apparatus includes a transceiver unit, and may further include a processing unit. The transceiver unit is configured to receive an intent request, where the intent request includes a first intention, and the first intention is a request for performing a first service. The transceiver unit is further configured to send a subscription request to an intent catalog, where the subscription request is used to subscribe to intent capability description information of a target intent producer at a network layer related to the first service. The transceiver unit is further configured to receive a subscription response, where the subscription response includes the intent capability description information of the target intent producer at the network layer. The transceiver unit is further configured to send a first call indication to the target intent producer at the network layer, where the first call indication indicates to call the target intent producer at the network layer.

Optionally, the intent capability description information includes at least one of the following: an intent handler role, a processing capability of an intent function, a status of an intent function module, a transmission format of an intent information model, a format of the intent information model, an intent interface type, an access address of the intent function module, an intent function layer, a supported domain, a name of the intent function, metadata of the intent function, the intent information model, an intent input, and an intent output.

According to an eighth aspect, an intent capability management apparatus is provided, to implement the method in any one of the third aspect or the implementations of the third aspect. For example, the apparatus may be a chip or a circuit. The foregoing method may be implemented by software, hardware, or hardware executing corresponding software.

In a possible implementation, the apparatus includes a transceiver unit, and may further include a processing unit. The transceiver unit is configured to receive a first call indication from an intent requester, where the first call indication indicates to call a target intent producer at a network layer related to a first service. The transceiver unit is further configured to send a subscription request to an intent catalog based on the first call indication, where the subscription request is used to subscribe to intent capability description information of at least one target intent producer at an element layer related to the first service. The transceiver unit is further configured to receive a subscription response from the intent catalog, where the subscription response includes the intent capability description information of the at least one target intent producer at the element layer. The transceiver unit is further configured to send a second call indication to the at least one target intent producer at the element layer, where the second call indication indicates to call the at least one target intent producer at the element layer.

Optionally, the transceiver unit is further configured to send an intent registration request to the intent catalog, where the intent registration request includes intent capability description information of the target intent producer at the network layer. The transceiver unit is further configured to receive an intent registration response from the intent catalog.

Optionally, the transceiver unit is further configured to receive a subscription update notification from the intent catalog, where the subscription update notification includes updated intent capability description information of the target intent producer at the element layer.

Optionally, the intent capability description information includes at least one of the following: an intent handler role, a processing capability of an intent function, a status of an intent function module, a transmission format of an intent information model, a format of the intent information model, an intent interface type, an access address of the intent function module, an intent function layer, a supported domain, a name of the intent function, metadata of the intent function, the intent information model, an intent input, and an intent output.

According to a ninth aspect, an intent capability management apparatus is provided, to implement the method in any one of the fourth aspect or the implementations of the fourth aspect. For example, the apparatus may be a chip or a circuit. The foregoing method may be implemented by software, hardware, or hardware executing corresponding software.

In a possible implementation, the apparatus includes a transceiver unit and a processing unit. The transceiver unit is configured to receive a second call indication from an intent producer at a network layer, where the second call indication indicates to call at least one target intent producer at an element layer. The processing unit is configured to configure, based on the second call indication, a network element related to a first service.

Optionally, the transceiver unit is further configured to send an intent registration request to an intent catalog, where the intent registration request includes intent capability description information of the target intent producer at the element layer. The transceiver unit is further configured to receive an intent registration response from the intent catalog.

Optionally, the processing unit is further configured to determine that intent capability description information of a network element is updated. The transceiver unit is further configured to send an update request to the intent catalog, where the update request is used to request to update the intent capability description information of the target intent producer at the element layer. The transceiver unit is further configured to receive an update response from the intent catalog.

Optionally, the intent capability description information includes at least one of the following: an intent handler role, a processing capability of an intent function, a status of an intent function module, a transmission format of an intent information model, a format of the intent information model, an intent interface type, an access address of the intent function module, an intent function layer, a supported domain, a name of the intent function, metadata of the intent function, the intent information model, an intent input, and an intent output.

With reference to the sixth aspect to the ninth aspect or any one of the sixth aspect to the ninth aspect, in still another possible implementation, the intent capability management apparatus according to the sixth aspect to the ninth aspect or any one of the sixth aspect to the ninth aspect includes a processor coupled to a memory, and the processor is configured to support the apparatus in performing a corresponding function in the intent capability management method. The memory is configured to be coupled to the processor, and stores a program (instructions) and/or data necessary for the apparatus. Optionally, the intent capability management apparatus may further include a communication interface, configured to support the apparatus in communicating with another network element. Optionally, the memory may be located inside the intent capability management apparatus, or may be located outside the intent capability management apparatus.

With reference to the sixth aspect to the ninth aspect or any one of the sixth aspect to the ninth aspect, in another possible implementation, the intent capability management apparatus according to the sixth aspect to the ninth aspect or any one of the sixth aspect to the ninth aspect includes a processor and a transceiver apparatus. The processor is coupled to the transceiver apparatus. The processor is configured to execute a computer program or instructions, to control the transceiver apparatus to receive and send information. When the processor executes the computer program or the instructions, the processor is further configured to implement the foregoing method through a logic circuit or by executing code instructions. The transceiver apparatus may be a transceiver, a transceiver circuit, or an input/output interface, and is configured to: receive a signal from an apparatus other than the intent capability management apparatus and transmit the signal to the processor, or send a signal from the processor to an apparatus other than the intent capability management apparatus. When the intent capability management apparatus is a chip, the transceiver apparatus is the transceiver circuit or the input/output interface.

When the intent capability management apparatus according to the sixth aspect to the ninth aspect or any one of the sixth aspect to the ninth aspect is a chip or a chip module, a sending unit may be an output unit, for example, an output circuit or a communication interface. A receiving unit may be an input unit, for example, an input circuit or a communication interface. When the intent capability management apparatus is a device, the sending unit may be a transmitter or a transmitter machine. The receiving unit may be a receiver or a receiver machine.

According to a tenth aspect, an intent capability management system is provided, including an intent catalog, an intent requester, a target intent producer at a network layer, and at least one target intent producer at an element layer. The intent catalog is configured to perform the method according to any one of the first aspect or the implementations of the first aspect. The intent requester is configured to perform the method according to the second aspect or the implementations of the second aspect. The target intent producer at the network layer is configured to perform the method according to any one of the third aspect or the implementations of the third aspect. The at least one target intent producer at the element layer is configured to perform the method according to any one of the fourth aspect or the implementations of the fourth aspect.

According to an eleventh aspect, a computer-readable storage medium is provided. The computer-readable storage medium stores a computer program or instructions. When a computer executes the computer program or the instructions, the methods according to the foregoing aspects are implemented.

According to a twelfth aspect, a computer program product including instructions is provided. When the instructions are run on an intent capability management apparatus, the intent capability management apparatus is caused to perform the methods in the foregoing aspects.

### BRIEF DESCRIPTION OF DRAWINGS

FIG. 1 shows an example of TMF intent capability description information;
FIG. 2 is a diagram of an architecture of an intent capability management system according to an embodiment of this application;
FIG. 3A and FIG. 3B are a diagram of translation and reference of an intent function module;
FIG. 4 is a diagram of a capability of an intent catalog according to an embodiment of this application;
FIG. 5 is a schematic flowchart of an intent capability management method according to an embodiment of this application;
FIG. 6A and FIG. 6B are a schematic flowchart of another intent capability management method according to an embodiment of this application;
FIG. 7 is a schematic flowchart of an example of registration and subscription in a DNN dedicated line provisioning scenario according to an embodiment of this application;
FIG. 8A and FIG. 8B are a schematic flowchart of an example of an intent capability management method in a DNN dedicated line provisioning scenario according to an embodiment of this application;
FIG. 9 is a diagram of a structure of an intent capability management apparatus according to an embodiment of this application; and
FIG. 10 is a diagram of a structure of another intent capability management apparatus according to an embodiment of this application.

### DESCRIPTION OF EMBODIMENTS

The following describes embodiments of this application with reference to the accompanying drawings in embodiments of this application.

"At least one piece (item)" described in this application below indicates one piece (item) or a plurality of pieces (items). A plurality of (items) means two (items) or more than two (items). The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. In addition, it should be understood that, although the terms first, second, and the like may be used in this application to describe objects, these objects are not limited by these terms. These terms are merely used for distinguishing the objects from each other.

The terms "including", "having", and any other variant thereof mentioned in the descriptions of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. It should be noted that in this application, the terms such as "example" or "for example" are used to represent giving an example, an illustration, or a description. Any method or design scheme described as an "example" or "for example" in this application should not be explained as being preferred or having more advantages than another method or design scheme. Exactly, use of the terms such as "example" or "for example" is intended to present a relative concept in a specific manner.

The following describes implementations of this application by using specific embodiments. A person skilled in the art may understand other advantages and effects of this application based on content disclosed in this specification. Although descriptions of this application are provided with reference to preferred embodiments, this does not mean that features of this application are limited to this implementation. On the contrary, a purpose of describing this application with reference to an implementation is to cover another option or modification that may be derived based on the claims of this application. To provide an in-depth understanding of this application, the following descriptions include a plurality of specific details. This application may be alternatively implemented without using these details. In addition, to avoid confusion or blurring a focus of this application, some specific details are omitted from the description. It should be noted that embodiments in this application and the features in embodiments may be mutually combined in the case of no conflict.

The following terms "first", "second", and the like are merely used for description, and shall not be understood as an indication or implication of relative importance or implicit indication of a quantity of indicated technical features. Therefore, a feature limited by "first", "second", or the like may explicitly or implicitly include one or more features. In the descriptions of this application, unless otherwise stated, "a plurality of" means two or more.

The following provides definitions of several terms that may be used in embodiments of this application:
Intent: The intent is a formal specification of all expectations, and includes requirements, objectives, and constraints for a technical system. An intent object is a structured carrier of the intent.
Intent handler: The intent handler receives an intent object, parses information such as a structured intent and a fulfillment status of the intent object, and correspondingly operates a domain that the intent handler is responsible for.
Intent management function: An intent processing capability exposed by the intent handler is referred to as the intent management function, namely, an intent function, or may be regarded as a function corresponding to an intent model. An intent management function module receives an intent object corresponding to the intent function, and parses an internal intent model of the module, to implement one execution of the intent function. One intent handler may include a plurality of intent management function modules.
Intent capability description information: The intent capability description information is used to describe details of the intent management function.
Intent management function interface: The intent management function interface is used to describe a type of intent functions. An intent capability type, an intent input, and an intent output are used to define an intent management function interface. One intent management function interface may be implemented by a plurality of intent handlers providing intent management functions.
Intent catalog: As an intent function library, the intent catalog provides an intent function management capability. Each intent function record stored in the intent catalog is the intent capability description information.
Intent producer: The intent producer provides the intent function.
Intent consumer: The intent consumer uses the intent function.

Currently, the digital economy is developing rapidly. The global telecom industry is accelerating a transformation towards network automation and intelligent upgrade. Low-cost, efficient, and simple operation and maintenance methods are used to quickly deploy networks to meet diversified services. Automatic orchestration capabilities gradually become a key focus for operators. An intent-driven network technology emerges to cope with challenges brought by network technology evolution, rapid service development, and complex operation and maintenance management. An intent-driven network focuses on expected results of network services and decouples expectations for a system from specific implementation details. The intent-driven network can automatically translate, verify, activate, and guarantee intents of an operator, to achieve a target network form and ensure network reliability. Through intent-driven interaction, users/operators express their service expectations and service objectives in a declarative manner, instead of describing "how to" achieve these expectations and objectives. This simplifies human-machine interaction, reduces manual operations of internal network management personnel, and lowers a usage threshold for external industry application customers.

The intent is an expectation for a service or network management, includes requirements, objectives, and constraints, and is irrelevant to system implementation. This application focuses on a network operation intent, the intent is to express an expectation for managing and controlling a series of network elements, and there is no need to pay attention to management implementation details of the network elements. For example, an intent of a user may be to provision a data network name (data network name, DNN) dedicated line in an area (where some network elements need to be configured.), and some specific communication requirements need to be met. The intent can be expressed by using a natural language or a structured data object.

Currently, an intent model may be constructed by using a rule-based modeling method, to convert the intent into a specific execution policy. For example, in a DNN dedicated line provisioning scenario, the intent model may be established to parse and translate an intent input of provisioning the DNN dedicated line, and generate a configuration command for a related network element. In an intent capability management system involving multi-party product collaboration, different products usually provide corresponding intent functions. During an operation process (especially during an upgrade process), a change of an intent function module of a single product causes a modification of a related intent model, which indicates tight coupling between intent function modules. In a cross-vendor scenario, it is difficult to unify intent modeling languages inside intent processing systems of vendors. Especially in a specific scenario application, it is difficult to make mutual reference between intent function modules.

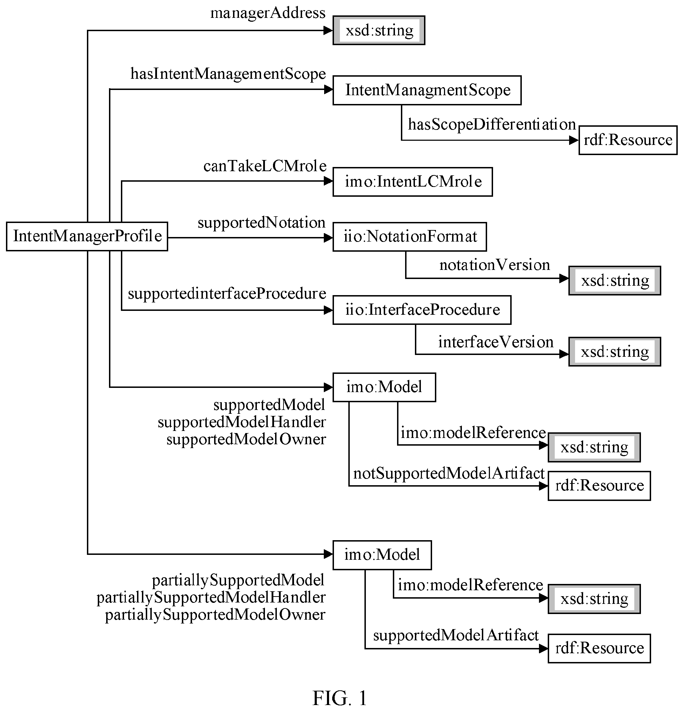

Currently, the TeleManagement Forum (TMF) IG1253D proposes a mechanism for registering and discovering intent capability description information. An intent-related model involved in the mechanism is based on an RDF/RDFS. TMF intent capability description information is defined as shown in FIG. 1, and specific TMF intent capability description information attributes are shown in the following Table 1:

**Table 1**

| Attribute | Description |
|---|---|
| IntentManagerAddress | Access address, for example, https://www.operator.com/AutonomousNetwork/Core/SliceManagment/ IntentManager/ |
| IntentManagementScope | Application scope, for example, ScopeSliceManagment |
| IntentLCMRole | Role: Handler/Owner, for example, [imo:intentOwner, imo:intentHandler] |
| NotationFormat | Transmission format of an RDF/RDFS intent information model, for example, [TURTLEnotation, RDFXMLnotation] |
| InterfaceProcedures | Supported interface type, for example, [SetProcedure, JudgeProcedure, BestProcedure] |
| SupportedModels | Supported specific intent information models, for example, [ a imo:Model ; |
| | imo:modelReference "http://www.w3.org/1999/02/22-rdf-syntax-ns#" ; |
| | ], |
| | [ a imo:Model ; |
| | imo:modelReference "http://www.w3.org/2000/01/rdf-schema#" ; |
| | ], |
| | [ a imo:IntentCommonModel ; |
| | imo:modelReference |
| | "https://www.tmforum.org/2020/07/IntentCommonModel" ; |
| | ], |
| | [ a imo:IntentCommonModel ; |
| | imo:modelReference |
| | "https://www.tmforum.org/2021/12/IntentCommonModel" ; |
| | ], |
| | [ a imo:IntentExtensionModel ; |
| | imo:modelReference |
| | "https://tmforum.org/IntentExtension/2021/12/IntentValidity" ; |
| | ], |
| | [ a imo:IntentExtensionModel ; |
| | imo:modelReference |
| | "https://tmforum.org/IntentExtension/2021/12/IntentTemporalValidity" ; |
| | ] , |
| | [ a imo:IntentExtensionModel ; |
| | imo:modelReference "http://www.w3.org/2006/time" ; |
| | ] ; |

However, the TMF intent capability description information has the following disadvantages.
1. Intent capability description information fields are insufficient, making it difficult to express an intent capability provided by the intent handler, such as vendor information or a real-time processing capability, to match the intent capability.
2. The intent capability description information has not been defined based on a scenario. A complex intent may be decomposed into a plurality of sub-intents based on different dimensions. However, how to decompose the intent is not defined in detail. For example, in the DNN dedicated line provisioning scenario, how to decompose a network-level intent into network-element-level intents is not defined. Further, each sub-intent is processed by one intent management function module. How to decompose intent capability description information of an intent at a top layer into intent capability description information of each sub-intent has not been defined. Further, no scenario-based decomposition case is available, especially how to decompose the intent capability description information to achieve a decoupling effect of the intent management function module is not defined.
3. The intent catalog provides only passive called capabilities such as addition, deletion, modification, and query, but lacks active initiating capabilities such as subscription/notification.

In view of this, this application provides a solution in which an intent capability management system automatically and flexibly discovers and triggers intent function processing corresponding to a version of a product from a vendor based on intentions of different users in an intent lifecycle management process. Intent function modules are decoupled by layers based on different vendors and product components. Different products provide intent function modules of the products to express implementation of a same function interface, to register capabilities with the intent catalog. The intent function modules are decoupled based on product versions and the intent function modules are integrated based on different vendors. As products of vendors change, intent function modules of different versions of different products may appear. The intent function module versions provided by different products need to be decoupled, to eliminate negative impact caused by a coupling relationship during an operation process (especially during an upgrade process).

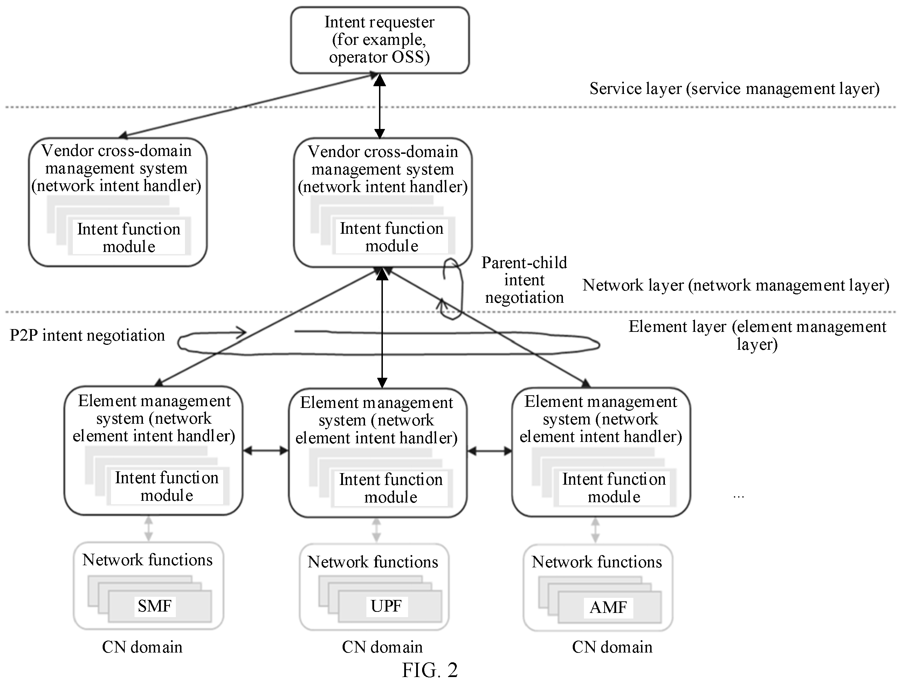

FIG. 2 is a diagram of an architecture of an intent capability management system according to an embodiment of this application. The intent capability management system includes an intent catalog (not shown), an intent requester, one or more intent producers at a network layer, and one or more intent producers at an element layer. The intent requester is located at a service management layer (service management layer) (referred to as a "service layer" for short) of the system. The intent requester may be an operation support system (operation support system, OSS) of an operator. An intent producer at a network management layer (network management layer) (referred to as the "network layer" for short) may be a vendor cross-domain management system, serves as a network intent handler, and includes one or more intent function modules. An intent producer at an element management layer (element management layer) (referred to as the "element layer" for short) may be an element management system corresponding to each domain (domain), serves as a network element intent handler, and includes one or more intent function modules. The domain may be a core network (core network, CN) domain, a transport domain, an access network domain, or the like. The intent producer at the network layer may perform parent-child intent negotiation with the intent producer at the element layer, and the parent-child intent capability negotiation refers to invocation of intent functions at different layers. P2P (peer to peer) intent capability negotiation may be performed between the intent producers at the element layer. The P2P intent capability negotiation refers to invocation of intent functions at a same layer. In addition, a same intent handler may be located at different layers, and division into layers is based on a layer at which an intent function is located. This application focuses on the intent function modules at the network layer and the element layer.

In embodiments of this application, the intent producer at the network layer or the element layer, serving as an intent handler, needs to support the following in a translation process.
(1) The intent producer can call other intent functions, for example, can reference the other intent functions through an application interface (application interface, API). During reference, an involved intent input parameter is obtained through intent translation.
(2) The intent producer can access the intent catalog to discover a needed intent function. A network element of a product of a version from a vendor can be obtained through intent input translation or obtained through automatic discovery and matching of the intent catalog. Each intent function needs to comply with an intent function interface and may be implemented by using its own logic.
(3) The intent producer can receive an intent catalog notification, to trigger a corresponding operation, and achieve a capability of an intent closed-loop.

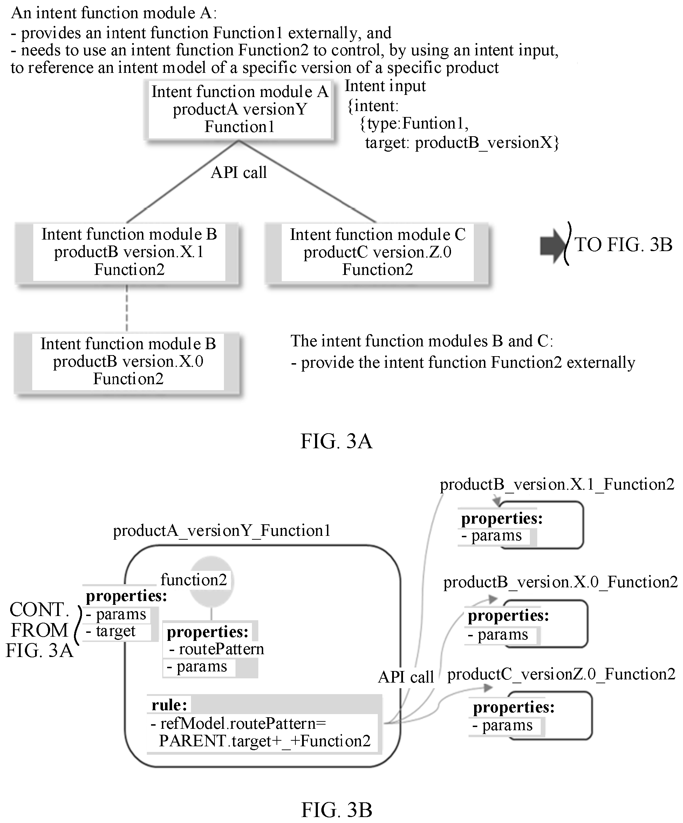

Further, specifically, for translation and reference in (1), FIG. 3A and FIG. 3B are a diagram of translation and reference of an intent function module. This example is a simple example. The intent capability management system includes three intent function modules A, B, and C, and two intent functions: Function1 and Function2. First, a northbound intent request uses Function1 and specifies a version X of the module B. Then, the module A receives the request, and an intent model corresponding to the module A obtains, through translation, that Function2 needs to be referenced. In addition, the intent model parses an intent input to lean that Function2 is provided by the version X of the module B. Then, the intent catalog is queried for intent function description information of Function2 of the version X of the module B. The intent catalog returns Function2 of a version X.1 of the module B according to a version compatibility principle. Finally, the module A sends an intent request to the module B to execute Function2. Further, the version compatibility principle (which needs to be considered in intent model design and release phases) mentioned in the foregoing steps is as follows: (1) An intent function interface remains unchanged, an internal intent model of an intent handler changes, and only a product model needs to be updated (an intent input does not need to be modified for minor version update, and a new version number is specified by the intent input for a major version). The function interface changes, and the interface is forward compatible. Only a model that uses and implements a new interface needs to be modified, and a model that implements an original interface does not need to change. The function interface changes and cannot be forward compatible, and all related models need to change. In this case, internal update of the module B or C affects only the module B or C, and does not affect another module.

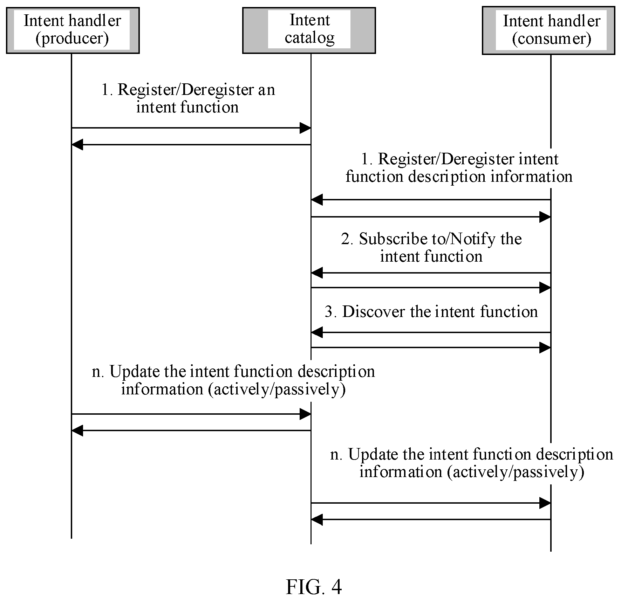

Further, with respect to (2) and (3), the key focus lies in a capability of the intent catalog. FIG. 4 is a diagram of a capability of an intent catalog according to an embodiment of this application. Core capabilities of the intent catalog include: (1) intent function description information registration/deregistration; (2) intent function subscription; (3) intent function discovery; and (n) intent function description information update, including two modes: active and passive. An intent handler initiates an access intent, and the directory passively performs update. The intent catalog actively accesses the intent handler and actively performs update. For an intent consumer, the capability of the intent catalog can be used to better complete four intent phases, including: (1) In intent translation, verification, and activation phases, an intent function discovery capability of the intent catalog is used to call an appropriate intent function module to execute a corresponding intent function. (2) In intent verification conflict check and intent maintenance phases, a notification capability of the intent catalog is used to trigger a corresponding operation.

Further, for registration of the intent function description information, the intent function description information is defined as shown in Table 2 below. A same function interface (with a same function, a same layer, a same intent input, and a same intent output) may be implemented by a plurality of different vendors, products, and versions. Intent decomposition is to decompose an intent into a plurality of sub-intents. It indicates to select an appropriate intent function, and also indicates to translate expectationModel in the table. In other words, expectationModel of one intent is decomposed into expectationModel of a plurality of sub-intents.

**Table 2**

| Attribute | Description |
|---|---|
| Role | Intent handler role: Owner/Handler, where Role corresponds to IntentLCMRole defined by the TMF |
| Capabilities | Used for intent capability satisfaction matching, and reflects processing capabilities of the intent handler for the intent function, where the capabilities are initially registered and can be undated |
| Performance | Used for intent capability satisfaction matching, and reflects a processing capability of the intent handler for the intent function, where the performance is updated in real time based on monitoring information |
| Status | Status of the intent function module: UP/DOWN |
| ContextExpress | Transmission format of the intent information model: YAML, XML, JSON, or RDFS, where ContextExpress corresponds to NotationFormat defined by the TMF |
| Format | Format of the intent information model: 3GPP/TMF/JSON |
| Interface | Intent interface type: CREATE/DELETE/MODIFY/REPORT/FEASIBLE, where Interface corresponds to InterfaceProcedures defined by the TMF |
| Endpoint | Access address of the intent function module: IRI/URI, where Endpoint corresponds to IntentManagerAddress defined by the TMF |
| Layer | Explicitly distinguishes intent function layers: NE network element layer/Network network layer |
| SupportedResDomain | CN core network, RAN radio, and Trans transmission, where SupportedResDomain corresponds to IntentManagementScope defined by the TMF |
| SupportedDomain | Slice slice, Configure configure, Upgrade upgrade, and Deploy deploy, where SupportedDomain corresponds to IntentManagementScope defined by the TMF |
| Function | Name of the intent function |
| Metadata | Metadata of the intent function, which needs to include a vendor (vendor), a product (product), and a version (version) |
| ExpectationModel | Intent information model, intent input/output (properties/attributes), and other related information, where ExpectationModel corresponds to SupportedModels defined by the TMF |

The following provides detailed descriptions with reference to specific embodiments.

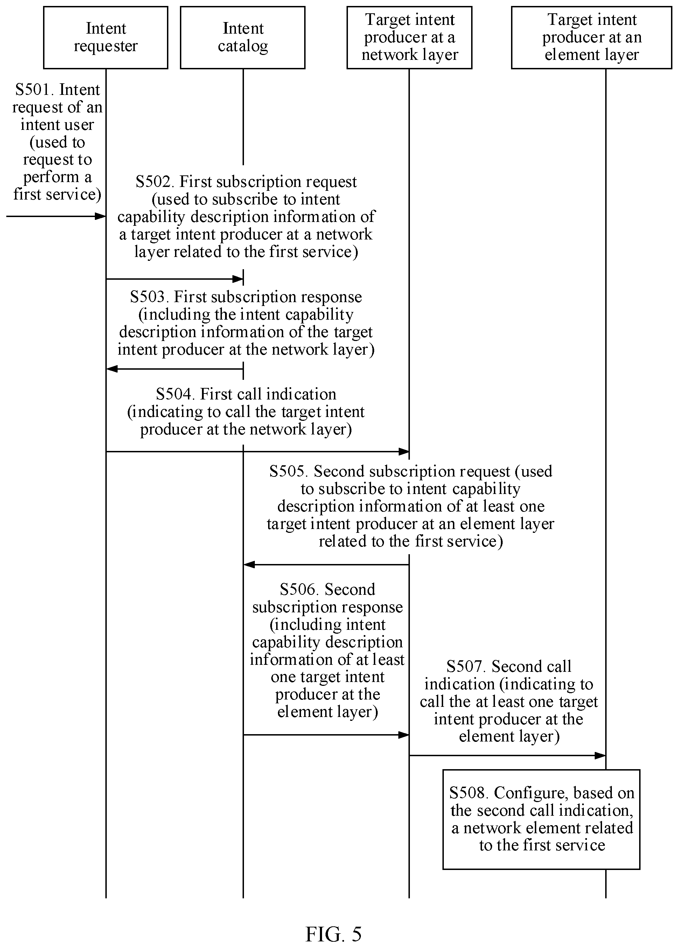

FIG. 5 is a schematic flowchart of an intent capability management method according to an embodiment of this application. For example, the method may include the following steps.

S501. An intent requester receives an intent request from an intent user.

The intent request includes a first intention, and the first intention is a request for performing a first service. To perform the first service, one or more network elements of one or more intent handlers at an element layer need to be configured.

S502. The intent requester sends a first subscription request to an intent catalog. Correspondingly, the intent catalog receives the first subscription request.

After receiving the intent request, the intent requester needs to first subscribe to intent capability description information of a target intent producer at a network layer related to the first service from the intent catalog, to determine a specific intent producer to execute the intent request and how to match an intent capability with the intent request. Therefore, the intent requester sends the first subscription request to the intent catalog, where the first subscription request is used to subscribe to the intent capability description information of the target intent producer at the network layer related to the first service. The intent catalog stores intent capability description information of one or more intent producers at the network layer, and a format of the intent capability description information is shown in the foregoing Table 2.

S503. The intent catalog sends a first subscription response to the intent requester. Correspondingly, the intent requester receives the first subscription response.

After receiving the first subscription request, the intent catalog obtains the intent capability description information that is stored in the intent catalog and that is of the target intent producer at the network layer related to the first service, and sends the first subscription response to the intent requester. The first subscription response includes the intent capability description information of the target intent producer at the network layer. The intent capability description information includes at least one of the following: an intent handler role, a processing capability of an intent function, a status of an intent function module, a transmission format of an intent information model, a format of the intent information model, an intent interface type, an access address of the intent function module, an intent function layer, a supported domain, a name of the intent function, metadata of the intent function, the intent information model, an intent input, and an intent output.

S504. The intent requester sends a first call indication to the target intent producer at the network layer. Correspondingly, the target intent producer at the network layer receives the first call indication.

The intent requester parses the intent capability description information that is of the target intent producer at the network layer and that is returned by the intent catalog, and then sends the first call indication to the target intent producer at the network layer, where the first call indication indicates to call the target intent producer at the network layer.

For example, the first call indication is an API request, a request address of the first call indication is endpoint+function+metadata.product in the intent capability description information, and a request body body is an expectationModel instance.

S505. The target intent producer at the network layer sends a second subscription request to the intent catalog based on the first call indication. Correspondingly, the intent catalog receives the second subscription request.

After receiving the intent request of the intent requester, the target intent producer at the network layer parses a corresponding internal intent model to obtain a network element of at least one target intent producer at the element layer in the scenario through translation. Therefore, the target intent producer sends the second subscription request to the intent catalog, where the second subscription request is used to subscribe to intent capability description information of at least one target intent producer at an element layer related to the first service.

S506. The intent catalog sends a second subscription response to the target intent producer at the network layer. Correspondingly, the target intent producer at the network layer receives the second subscription response.

The intent catalog stores intent capability description information of one or more intent producers at the element layer in advance. Therefore, after receiving the second subscription request, the intent catalog searches for the intent capability description information of the at least one target intent producer at the element layer related to the first service, and sends the second subscription response to the target intent producer at the network layer, where the second subscription response includes the intent capability description information of the at least one target intent producer at the element layer.

S507. The target intent producer at the network layer sends a second call indication to the at least one target intent producer at the element layer. Correspondingly, the at least one target intent producer at the element layer receives the second call indication.

After receiving the second subscription response, the target intent producer at the network layer sends the second call indication to each of the at least one target intent producer at the element layer, where the second call indication indicates to call the at least one target intent producer at the element layer, and each target intent producer at the element layer completes configuration of a network element related to the first service.

For example, the second call indication may be an API request, a request address of the API request is endpoint+function++metadata.product in the intent capability description information, and a request body body is an expectationModel instance.

S508. The at least one target intent producer at the element layer configures, based on the second call indication, the network element related to the first service.

After receiving the second call indication, each target intent producer at the element layer completes the configuration of the network element related to the first service.

According to the intent capability management method provided in this embodiment of this application, the intent requester subscribes to the intent capability description information of the target intent producer at the service-related network layer from the intent catalog based on the received intent request, and sends the first call indication to the target intent producer at the network layer, where the first call indication indicates to call the target intent producer at the network layer. The target intent producer at the network layer subscribes to the intent capability description information of the target intent producer at the service-related element layer from the intent catalog based on the first call indication, and calls the at least one target intent producer at the element layer. In addition, the at least one target intent producer at the element layer configures, based on the call indication, the network element related to the first service. In this way, intent function processing corresponding to a version of a product from a vendor can be automatically and flexibly discovered and triggered based on intentions of different users.

The foregoing embodiment describes that the intent catalog may provide a subscription service for the intent requester and the intent producer at the network layer. The following embodiment describes that an intent producer at a network layer and an intent producer at an element layer may perform registration with an intent catalog in advance, so that the intent catalog provides the foregoing subscription service.

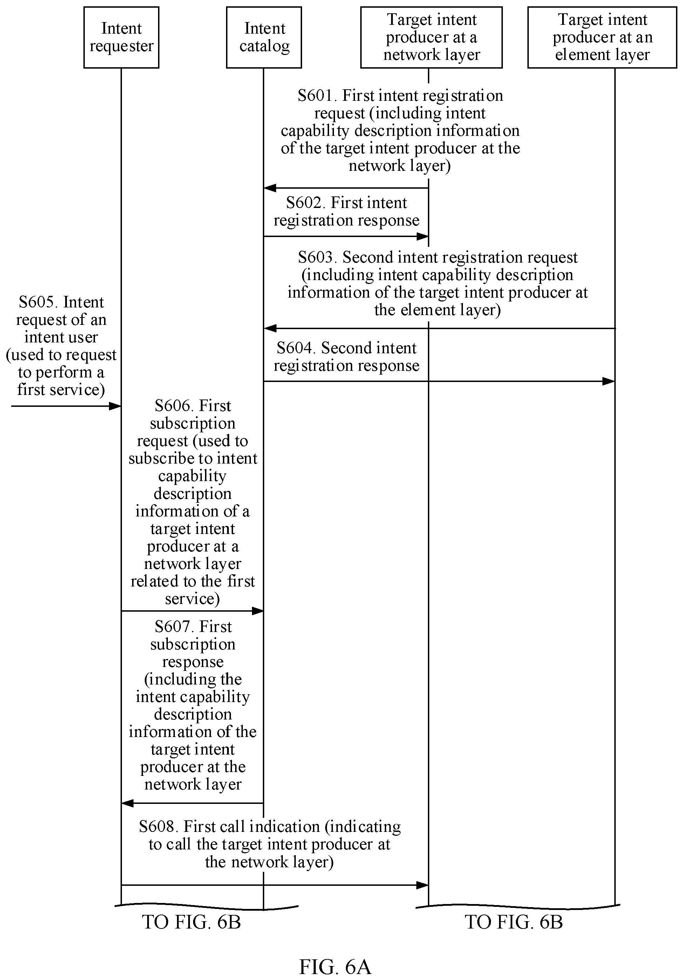

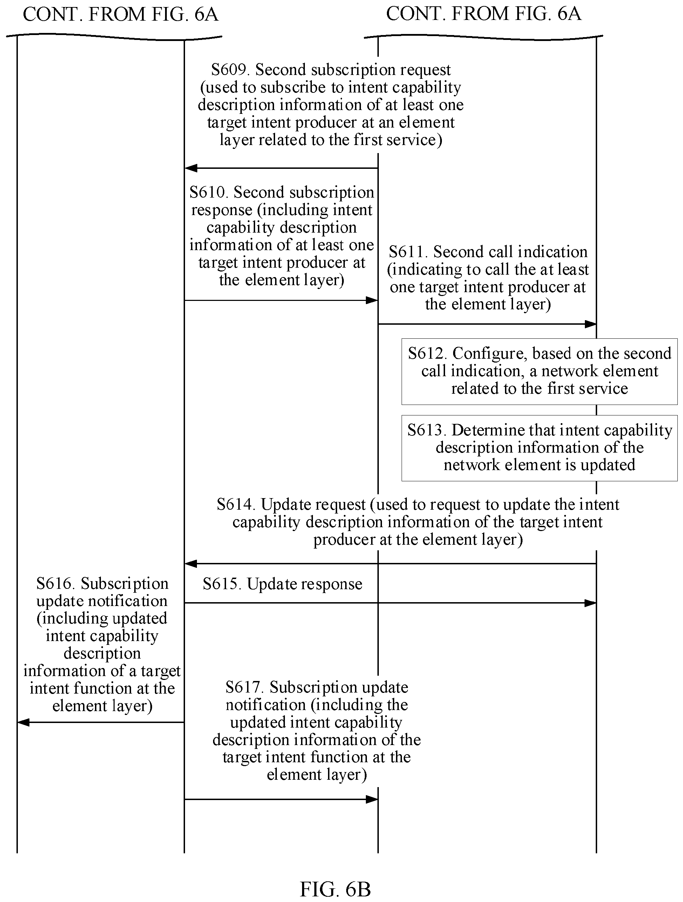

FIG. 6A and FIG. 6B are a schematic flowchart of another intent capability management method according to an embodiment of this application. For example, the method may include the following steps.

S601. A target intent producer at a network layer sends a first intent registration request to an intent catalog. Correspondingly, the intent catalog receives the first intent registration request.

In this embodiment, the target intent producer at the network layer, serving as an intent producer, may register an intent function at the network layer with the intent catalog, and send the first intent registration request to the intent catalog. The first intent registration request includes intent capability description information of the target intent producer at the network layer.

S602. The intent catalog sends a first intent registration response to the target intent producer at the network layer. Correspondingly, the target intent producer at the network layer receives the first intent registration response.

The first intent registration response indicates that the intent catalog has successfully registered the intent capability description information of the target intent producer at the network layer in the intent catalog.

S603. A target intent producer at an element layer sends a second intent registration request to the intent catalog. Correspondingly, the intent catalog receives the second intent registration request.

The target intent producer at the element layer, serving as an intent producer, registers an intent function at the element layer with the intent catalog, and sends the second intent registration request to the intent catalog. The second intent registration request includes intent capability description information of the target intent producer at the element layer.

S604. The intent catalog sends a second intent registration response to the target intent producer at the element layer. Correspondingly, the target intent producer at the element layer receives the second intent registration response.

The second intent registration response indicates that the intent catalog has successfully registered the intent capability description information of the target intent producer at the element layer in the intent catalog.

It may be understood that there is no sequence between steps S601 and S602 and steps S603 and S604.

S605. An intent requester receives an intent request from an intent user.

The intent request includes a first intention, and the first intention is a request for performing a first service.

For specific implementation of this step, refer to step S501 in the embodiment shown in FIG. 5. Details are not described herein again.

S606. The intent requester sends a first subscription request to the intent catalog. Correspondingly, the intent catalog receives the first subscription request.

The first subscription request is used to subscribe to intent capability description information of a target intent producer at a network layer related to the first service.

For specific implementation of this step, refer to step S502 in the embodiment shown in FIG. 5. Details are not described herein again.

S607. The intent catalog sends a first subscription response to the intent requester. Correspondingly, the intent requester receives the first subscription response.

The first subscription response includes the intent capability description information of the target intent producer at the network layer.

For specific implementation of this step, refer to step S503 in the embodiment shown in FIG. 5. Details are not described herein again.

S608. The intent requester sends a first call indication to the target intent producer at the network layer. Correspondingly, the target intent producer at the network layer receives the first call indication.

The first call indication indicates to call the target intent producer at the network layer.

For specific implementation of this step, refer to step S504 in the embodiment shown in FIG. 5. Details are not described herein again.

S609. The target intent producer at the network layer sends a second subscription request to the intent catalog based on the first call indication. Correspondingly, the intent catalog receives the second subscription request.

The second subscription request is used to subscribe to intent capability description information of a target intent producer at an element layer related to the first service.

For specific implementation of this step, refer to step S505 in the embodiment shown in FIG. 5. Details are not described herein again.

S610. The intent catalog sends a second subscription response to the intent producer at the network layer. Correspondingly, the intent producer at the network layer receives the second subscription response.

The second subscription response includes the intent capability description information of the target intent producer at the element layer.

For specific implementation of this step, refer to step S506 in the embodiment shown in FIG. 5. Details are not described herein again.

S611. The intent producer at the network layer sends a second call indication to the target intent producer at the element layer. The target intent producer at the element layer receives the second call indication.

The second call indication indicates to call the target intent producer at the element layer.

For specific implementation of this step, refer to step S507 in the embodiment shown in FIG. 5. Details are not described herein again.

S612. The target intent producer at the element layer configures, based on the second call indication, a network element related to the first service.

For specific implementation of this step, refer to step S508 in the embodiment shown in FIG. 5. Details are not described herein again.

S613. The target intent producer at the element layer determines that intent capability description information of the network element is updated.

For example, if finding that the network element related to the first service is abnormal, the target intent producer at the element layer determines that the intent capability description information of the network element is updated.

S614. The target intent producer at the element layer sends an update request to the intent catalog. Correspondingly, the intent catalog receives the update request.

After determining that the intent capability description information at the element layer is updated, the target intent producer at the element layer sends the update request to the intent catalog. The update request is used to request to update the intent capability description information of the target intent producer at the element layer.

S615. The intent catalog sends an update response to the target intent producer at the element layer. Correspondingly, the target intent producer at the element layer receives the update response.

The update response indicates that the intent catalog successfully receives updated intent capability description information of the target intent producer at the element layer.

S616 and S617. The intent catalog separately sends a subscription update notification to the intent requester and the intent producer at the network layer. Correspondingly, the intent requester and the intent producer at the network layer receive the subscription update notification.

Because the intent requester and the intent producer at the network layer has subscribed to the intent catalog before, after receiving the updated intent capability description information of the target intent producer at the element layer, the intent catalog separately sends the subscription update notification to the intent requester and the intent producer at the network layer, where the subscription update notification includes the updated intent capability description information of the target intent producer at the element layer.

According to the intent capability management method provided in this embodiment of this application, at least one intent producer at the network layer or the element layer registers its intent capability description information with the intent catalog in advance, so that when receiving the intent request from the intent requester, the intent catalog can call a corresponding intent producer at the network layer or the element layer to execute an intent function.

The intent requester subscribes to the intent capability description information of the target intent producer at the service-related network layer from the intent catalog based on the received intent request, and sends the first call indication to the target intent producer at the network layer, where the first call indication indicates to call the target intent producer at the network layer. The target intent producer at the network layer subscribes to the intent capability description information of the target intent producer at the service-related element layer from the intent catalog based on the first call indication, and calls at least one target intent producer at the element layer. In addition, the at least one target intent producer at the element layer configures, based on the call indication, the network element related to the first service. In this way, intent function processing corresponding to a version of a product from a vendor can be automatically and flexibly discovered and triggered based on intentions of different users.

In a process of executing an intent, after determining that the intent capability description information at the element layer is updated, the target intent producer at the element layer sends the update request to the intent catalog in a timely manner, so that the intent requester and the intent producer at the network layer can obtain the updated intent capability description information of the target intent producer at the element layer in a timely manner, thereby improving model capability management efficiency.

The following uses DNN dedicated line provisioning as an example to describe definition, registration, subscription, and intent capability management of intent capability description information.

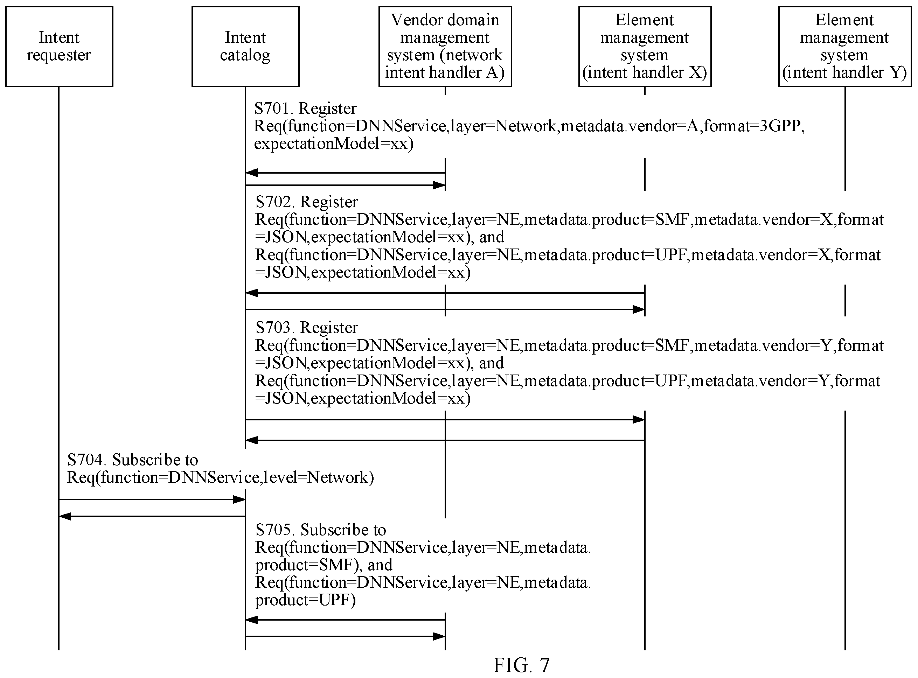

FIG. 7 is a schematic flowchart of an example of registration and subscription in a DNN dedicated line provisioning scenario according to an embodiment of this application. The DNN dedicated line provisioning scenario includes two network elements: an SMF and a UPF. An intent capability management system includes one intent requester S and three intent handlers A, X, and Y. S is an intent requester at a service layer, may be an OSS of an operator, and serves as an intent consumer (consumer) to use an intent function. A is a vendor cross-domain management system, that is, an intent handler at a network layer, serves as an intent producer (producer) to provide an intent function at the network layer, and also serves as a consumer to use an intent function at an element layer. Both X and Y are element management systems, that is, intent handlers at the element layer, and serves as intent producers to provide intent functions. The intent capability management system includes an intent catalog. The operator may provide the intent catalog, and each vendor registers its intent function and uses a capability of the intent catalog. Alternatively, a vendor provides the intent catalog and opens a registration capability of the vendor to other vendors. Alternatively, a vendor provides the intent catalog and opens a subscription/discovery capability to other vendors. In intent capability description information in an intent registration phase, expectationModel at the network layer indicates an intent input and output, is directed toward the northbound external interface, which adopts a 3GPP format in this embodiment.; and an intent input and output expectationModel at the element layer is obtained by a model at the network layer through performing decomposition and uses a simplest JSON format in this embodiment. Specific steps for the registration and subscription are as follows.

S701. The network intent handler A, serving as the intent producer, registers a DNNService function at the network layer with the intent catalog. Specific intent capability description information is as follows, and fields that need to be focused on have been identified in a sequence diagram shown in FIG. 7.

```
{
           "role": "owner",
           "capabilities": {
               "priority": 1,
               "weight": 1,
               "load": null
           },
           "performance": {
               "failure": 0,
               "fulfill": 10,
               "load": null
           },
           "status": "UP",
           "contextExpress": "JSON",
           "format": "3GPP",
           "interface": ["CREATE", "DELETE", "MODIFY", "REPORT"],
           "endpoint": "https://domainnameA.com/Core/intent",
           "layer": "Network",
           "supportedResDomain": "CN",
           "supportedDomain": "Configure",
           "function": "DNNService",
           "metadata": {
               "vendor": "A",
               "version": "23.0.0",
               "product": "DNN"
           },
           "expectationModel": {
                   "expectationId": {
                       "type": "string"
                   },
                   "expectationVerb": {
                       "type": "string"
                   },
                   "expectationObject": {
                       "type": "ExpectationObject",
                   },
                   "expectationTargets": {
                       "type": "list",
                       "entry_schema": {
                           "type": "ExpectationTarget"
         }
         }
         }
         }
```

S702. The intent handler X, serving as the intent producer, registers a DNNService function at the element layer with the intent catalog. Specific intent capability description information of the SMF and the UPF is as follows, and fields that need to be focused on have been identified in the sequence diagram shown in FIG. 7.

SMF configuration capability description information for a DNN dedicated line of the intent handler X:

```
         {
           "role": "handler",
           "capabilities": {
               "priority": 1,
               "weight": 1,
               "load": null
           },
           "performance": {
               "failure": 0,
               "fulfill": 8,
               "load": null
           },
           "status": "UP",
           "contextExpress": "JSON",
           "format": "JSON",
           "interface": ["CREATE", "DELETE", "MODIFY", "REPORT"],
           "endpoint": "https://domainnameX.com/Core/intent",
           "layer": "NE",
           "supportedResDomain": "CN",
           "supportedDomain": "Configure",
           "function": "DNNService",
           "metadata": {
               "vendor": "X",
               "version": "23.1",
               "product": "SMF"
           },
           "expectationModel": {
               "properties": {
         "nfConfigInstName": {
                       "type": "string"
                   },
                   "configObject": {
                       "type": "string"
                   },
                   "nfVersion": {
                       "type": "string"
                   },
                   "resourceVersion": {
                       "type": "string"
                   },
                   "hadVpn": {
                       "type": "string"
                   },
                   "hasVpnV6": {
                       "type": "string"
                   },
                   "vpnInstance": {
                       "type": "string"
                   },
                   "vpnInstanceV6": {
                       "type": "string"
                   },
                   "vpnName": {
                       "type": "string"
         }
         
```

UPF configuration capability description information for the DNN dedicated line of the intent handler X:

```
         {
           "role": "handler",
           "capabilities": {
               "priority": 1,
               "weight": 1,
               "load": null
           },
           "performance": {
               "failure": 0,
               "fulfill": 9,
               "load": null
           },
           "status": "UP",
           "contextExpress": "JSON",
           "format": "JSON",
           "interface": ["CREATE", "DELETE", "MODIFY", "REPORT"],
           "endpoint": "https://domainnameX.com/Core/intent",
           "layer": "NE",
           "supportedResDomain": "CN",
           "supportedDomain": "Configure",
           "function": "DNNService",
           "metadata": {
               "vendor": "X",
               "version": "23.1",
               "product": "UPF"
           },
           "expectationModel": {
         "properties": {
                   "nfConfigInstName": {
                       "type": "string"
                   },
                   "configObject": {
                       "type": "string"
                   },
                   "nfVersion": {
                       "type": "string"
                   },
                   "resourceVersion": {
                       "type": "string"
                   },
                   "vpnName": {
                       "type": "string"
                   },
                   "bfdPeerList": {
                       "type": "list",
                       "entry_schema": {
                           "type": "BfdPeer"
                   },
                   "nextHopIpList": {
                       "type": "list",
                       "entry_schema": {
                           "type": "NextHop"
                       }
                   },
                   "poolList": {
                       "type": "list",
                       "entry_schema": {
                           "type": "Pool"
                       }
                   },
               }
           }
         }
         
```

S703. The intent handler Y, serving as the intent producer, registers the DNNService function at the element layer with the intent catalog. Specific intent capability description information of the SMF and the UPF is as follows, and fields that need to be focused on have been identified in the sequence diagram shown in FIG. 7. The capability description information is similar to that of X. The following describes only differences.

SMF configuration capability description information for a DNN dedicated line of the intent handler Y:

```
         {
           "capabilities": {
               "priority": 1,
               "weight": 1,
               "load": null
           },
           "performance": {
               "failure": 0,
               "fulfill": 2,
               "load": null
           },
           "endpoint": "https://domainnameY.com/Core/intent",
           "metadata": {
               "vendor": "Y",
               "version": "23.1",
               "product": "SMF"
         }
```

UPF configuration capability description information for the DNN dedicated line of the intent handler Y:

```
         {
           "capabilities": {
               "priority": 1,
               "weight": 1,
               "load": null
           },
           "performance": {
               "failure": 0,
               "fulfill": 2,
               "load": null
           },
           "endpoint": "https://domainnameY.com/Core/intent",
           "metadata": {
               "vendor": "Y",
               "version": "23.1",
               "product": "UPF"
         }
         
```

S704. The intent requester S at the service layer, serving as the intent consumer, subscribes to a DNNService intent function at the network layer with the intent catalog, and can initiate a DNN dedicated line provisioning intent.

S705. The intent handler A at the network layer, serving as the intent consumer, subscribes to DNNService intent functions of the SMF and UPF network elements at the element layer with the intent catalog, and can initiate an intent request to a corresponding intent function module to configure a corresponding network element.

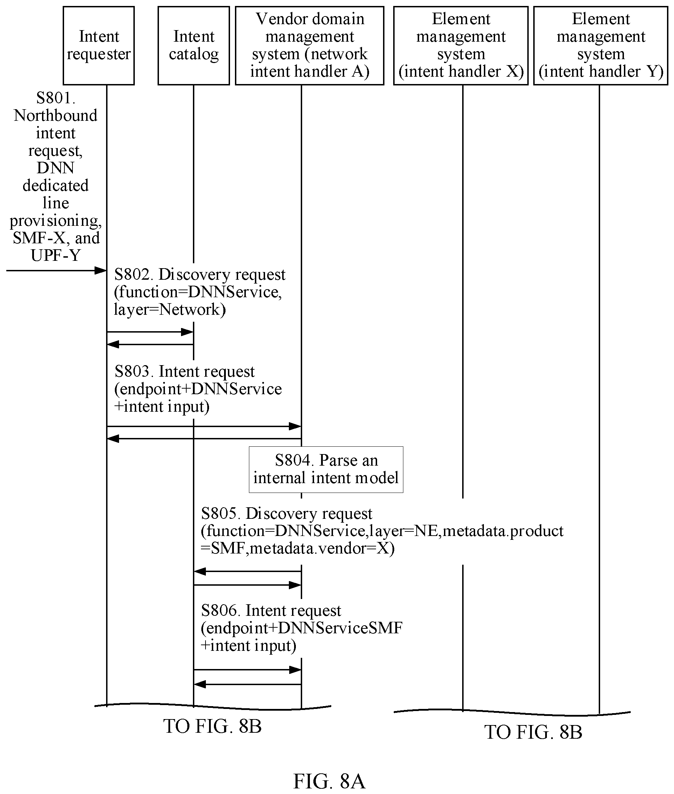

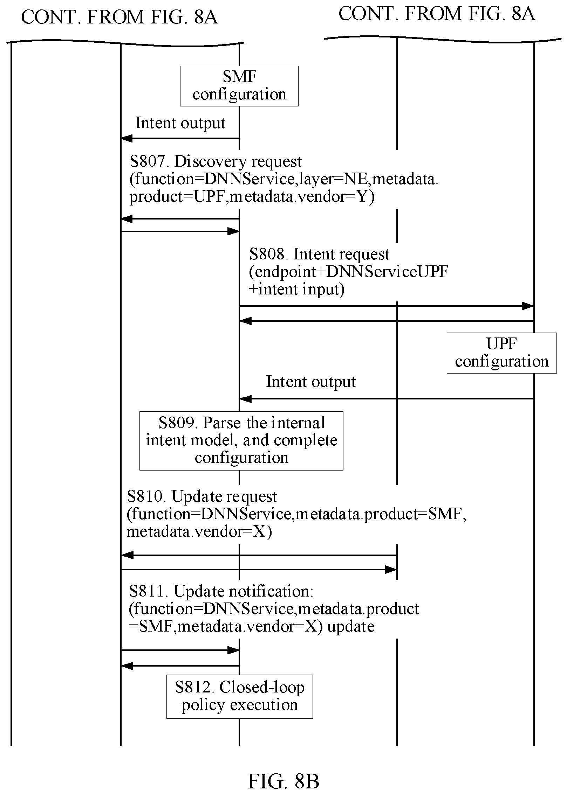

FIG. 8A and FIG. 8B are a schematic flowchart of an example of an intent capability management method in a DNN dedicated line provisioning scenario according to an embodiment of this application. For example, the method may include the following steps.

S801. An intent requester S (for example, an OSS) receives a northbound intent request. The intent request is used to request to provision a DNN dedicated line, and configure an SMF network element of an intent handler X and a UPF network element of an intent handler Y.

For example, an intent user initiates the intent request to the intent requester S at a service layer, to request to provision the DNN dedicated line, and configure the SMF network element of the intent handler X and the UPF network element of the intent handler Y.

S802. The intent requester sends a discovery request to an intent catalog. The discovery request is used to search for a DNNService intent producer at a network layer.

After receiving the discovery request, the intent catalog returns capability description information of an intent function DNNService at the network layer of an intent handler A to the intent requester.

For example, the intent handler A may be a vendor domain management system.

S803. The intent requester S parses the intent capability description information that is of the intent function DNNService at the network layer of the intent handler A and that is returned by the intent catalog, and then initiates an API request (that is, a DNN dedicated line provisioning intent request) to the intent handler A, where a request address is endpoint+function+metadata.product in the intent capability description information, and a request body body is an expectationModel instance. An example is as follows:

```
         POST https://domainnameA.com/Core/intent/DNNService/DNN
         {
               "expectationId": 1,
               "expectationVerb": "DELIVER",
               "expectationObject": {
                   "objectType": "Service support",
                   "objectContexts": [
                       {
                           "contextAttribute": "ApplicableSlice",
                           "contextCondition": "is with range",
                           "contextValueRange": "SNSSAI"
                       {
                           "contextAttribute": "coverageAreaTAContext",
                           "contextCondition": "is with range",
                           "contextValueRange": "xx, xx"
                       },
                       {
                           "contextAttribute": "NFInstanceContext",
                           "contextCondition": "is with range",
                           "contextValueRange": "SMFInstance, UPFInstance-1,
                           UPFInstance-2"
                       }
                   ]
               },
               "expectationTargets": [
                   {
                       "targetName": "DNN",
                       "targetCondition": "is equal to",
                       "targetValueRange": "apn name"
                   },
                   {
                       "targetName": "IpPool",
                       "targetCondition": "IS_WITHIN_RANGE",
                       "targetValueRange": "(startIP-1, endIP-1), (startIP-2, endIP-2)"
                   },
                   {
                       "targetName": "TransportConnectionTarget",
                       "targetCondition": "IS_WITHIN_RANGE",
                       "targetValueRange": "xxx,xxx",
                       "targetContexts": [
                           {
                               "contextAttribute": "TransportConext",
                               "contextCondition": "is equal to",
                               "contextValueRange": "xxx"
                       ]
               } ]
         }
```

S804. After receiving the DNN dedicated line provisioning intent request of the intent handler S at the service layer, the intent handler A, serving as the intent producer at the network layer, parses a corresponding internal intent model, to obtain, through translation, an SMF network element provided by one intent handler X and UPF network elements provided by two intent handlers Y in this scenario, and two intent functions at the element layer need to be further used: (1) an SMF configuration function of DNNService from the intent handler X and a corresponding intent input parameter; and (2) a UPF configuration function of DNNService from the intent handler Y and a corresponding intent input parameter.

S805. The intent handler A initiates a discovery request to the intent catalog, to search for an intent producer of a DNNService network element SMF at the element layer, and then the intent catalog receives the discovery request of the intent handler A, and returns intent capability description information of the intent function DNNService network element SMF at the element layer of the intent handler X.

S806. The intent handler A parses the intent capability description information that is of the intent function DNNService network element SMF at the element layer of the intent handler X and that is returned by the intent catalog, and then initiates one API request to the intent handler X, so that the intent handler X, serving as the intent producer at the element layer, completes configuration of the SMF network element. A request address is endpoint+function++metadata.product in the intent capability description information, and a request body body is an expectationModel instance. An example is as follows:

```
         POST https://domainnameX.com/Core/intent/DNNService/SMF
         {
           "nfConfigInstName": "DnnDedicatedLineSMF",
           "configObject": "DnnDedicatedLine",
           "nfVersion": "23.1",
           "resourceVersion": "xxx",
           "vpnName": "APN1_vpn",
           "hasVpn": "ENABLE",
           "hasVpnV6": "ENABLE",
           "vpnInstance": "APN1_vpn",
           "vpnInstanceV6": "APN1_vpn",
         }
```

S807. The intent handler A initiates a discovery request to the intent catalog, to search for an intent producer of a DNNService network element UPF at the element layer, and then the intent catalog receives the discovery request of the intent handler A, and returns intent capability description information of the intent function DNNService network element UPF at the element layer of the intent handler Y.

S808. The intent handler A parses the intent capability description information that is of the intent function DNNService network element UPF at the element layer of the intent handler Y and that is returned by the intent catalog, and then initiates two API requests to the intent handler Y, and the intent handler Y, serving as the intent producer at the element layer, completes configuration of the UPF network element. A request address is endpoint+function++metadata.product in the intent capability description information, and a request body body is an expectationModel instance. Two request examples are as follows:

```
         POST https://domainnameY.com/Core/intent/DNNService/UPF
         Body:
         {
           "nfConfigInstName": "DnnDedicatedLineUPF_01",
           "configObject": "DnnDedicatedLine",
           "nfVersion": "23.1",
           "resourceVersion": "xxx",
                   "nextHopIpList": [
                       {
                           "nextHop": "192.168.11.11",
                           "maskLen": "32",
                           "bfdTemplateName": "APN1_service_IPv4_bfd_31",
                           "serviceName": "APN1_service_IPv4",
                           "prefix": "192.168.11.1",
                           "ipVer": "IPv4"
                       },
                       {
                           "nextHop": "192.168.11.12",
                           "maskLen": "32",
                           "bfdTemplateName": "APN1_service_IPv4_bfd_32",
                           "serviceName": "APN1_service_IPv4",
                           "prefix": "192.168.11.2",
                           "ipVer": "IPv4"
                       },
                       {
                           "nextHop": "fc00:187:C28C::1",
                           "maskLen": "128",
                           "bfdTemplateName": "APN1_service_IPv6_bfd_33",
                           "serviceName": "APN1_service_IPv6",
                           "prefix": "fc00:187:C289::1",
                           "ipVer": "IPv6"
                       },
                       {
                           "nextHop": "fc00:187:C28C::2",
                           "maskLen": "128",
                           "bfdTemplateName": "APN1_service_IPv6_bfd_34",
                           "serviceName": "APN1_service_IPv6",
                           "prefix": "fc00:187:C289::2",
                           "ipVer": "IPv6"
                       }
                   ],
                   "bfdPeerList": [
                       {
                           "ipVersion": "IPv4",
                           "destAddrV4": "192.168.11.11",
                           "serviceName": "APN1_service_IPv4",
                           "templateName": "APN1_service_IPv4_bfd_31",
                           "destAddrV6": ""
                       },
                       {
                           "ipVersion": "IPv4",
                           "destAddrV4": "192.168.11.12",
                           "serviceName": "APN1_service_IPv4",
                           "templateName": "APN1_service_IPv4_bfd_32",
                           "destAddrV6": ""
                       },
                       {
                           "ipVersion": "IPv6",
                           "destAddrV4": "",
                           "serviceName": "APN1_service_IPv6",
                           "templateName": "APN1_service_IPv6_bfd_33",
                           "destAddrV6": "fc00:187:C28C::1"
                       },
                       {
                           "ipVersion": "IPv6",
                           "destAddrV4": "",
                           "serviceName": "APN1_service_IPv6",
                           "templateName": "APN1_service_IPv6_bfd_34",
                           "destAddrV6": "fc00:187:C28C::2"
                       }
                   ],
                   "bgpPeerList": [
                       {
                           "localAddrV4": "172.20.9.7",
                           "afType": "ipv4uni",
                           "localAddrV6": "",
                           "remoteAS": "64813",
                           "addressType": "ipv4",
                           "peerAddrV4": "192.168.11.1",
                           "peerAddrV6": "",
                           "maxHop": 2
                       },
                       {
                           "localAddrV4": "172.20.9.7",
                           "afType": "ipv4uni",
                           "localAddrV6": "",
                           "remoteAS": "64813",
                           "addressType": "ipv4",
                           "peerAddrV4": "192.168.11.2",
                           "peerAddrV6": "",
                           "maxHop": 2
                       {
                           "localAddrV4": "",
                           "afType": "ipv6uni",
                           "localAddrV6": "fc00:187:C281::1",
                           "remoteAS": "64813",
                           "addressType": "ipv6",
                           "peerAddrV4": "",
                           "peerAddrV6": "fc00:187:C289::1",
                           "maxHop": 2
                       {
                           "localAddrV4": "",
                           "afType": "ipv6uni",
                           "localAddrV6": "fc00:187:C281::1",
                           "remoteAS": "64813",
                           "addressType": "ipv6",
                           "peerAddrV4": "",
                           "peerAddrV6": "fc00:187:C289::2",
                           "maxHop": 2
                   ],
                   "poolList": [
                       {
                           "poolName": "APN1IPv4_p",
                           "ipVersion": "IPv4"
                           "poolName": "APN1IPv6_p",
                           "ipVersion": "IPv6"
                   ],
                   "vpnName": "APN1_vpn",
         POST https://domainnameY.com/Core/intent/DNNService/UPF
         Body:
         {
         "nfConfigInstName": "DnnDedicatedLineUPF_02",
           "configObject": "DnnDedicatedLine",
           "nfVersion": "23.1",
           "resourceVersion": "xxx",
                   "nextHopIpList": [
                       {
                           "nextHop": "193.168.11.11",
                           "maskLen": "32",
                           "bfdTemplateName": "APN1_service_IPv4_bfd_31",
                           "serviceName": "APN1_service_IPv4",
                           "prefix": "193.168.11.1",
                           "ipVer": "IPv4"
                       },
                       {
                           "nextHop": "193.168.11.12",
                           "maskLen": "32",
                           "bfdTemplateName": "APN1_service_IPv4_bfd_32",
                           "serviceName": "APN1_service_IPv4",
                           "prefix": "193.168.11.2",
                           "ipVer": "IPv4"
                       },
                       {
                           "nextHop": "fc01:187:C28C::1",
                           "maskLen": "128",
                           "bfdTemplateName": "APN1_service_IPv6_bfd_33",
                           "serviceName": "APN1_service_IPv6",
                           "prefix": "fc01:187:C289::1",
                           "ipVer": "IPv6"
                       },
                       {
                           "nextHop": "fc01:187:C28C::2",
                           "maskLen": "128",
                           "bfdTemplateName": "APN1_service_IPv6_bfd_34",
                           "serviceName": "APN1_service_IPv6",
                           "prefix": "fc01:187:C289::2",
                           "ipVer": "IPv6"
                   ],
                   "bfdPeerList": [
                       {
                           "ipVersion": "IPv4",
                           "destAddrV4": "193.168.11.11",
                           "serviceName": "APN1_service_IPv4",
                           "templateName": "APN1_service_IPv4_bfd_31",
                           "destAddrV6": ""
                       },
                       {
                           "ipVersion": "IPv4",
                           "destAddrV4": "193.168.11.12",
                           "serviceName": "APN1_service_IPv4",
                           "templateName": "APN1_service_IPv4_bfd_32",
                           "destAddrV6": ""
                       },
                       {
                           "ipVersion": "IPv6",
                           "destAddrV4": "",
                           "serviceName": "APN1_service_IPv6",
                           "templateName": "APN1_service_IPv6_bfd_33",
                           "destAddrV6": "fc01:187:C28C::1"
                       },
                       {
                           "ipVersion": "IPv6",
                           "destAddrV4": "",
                           "serviceName": "APN1_service_IPv6",
                           "templateName": "APN1_service_IPv6_bfd_34",
                           "destAddrV6": "fc01:187:C28C::2"
                   ],
                   "bgpPeerList": [
                       {
                           "localAddrV4": "173.20.9.7",
                           "afType": "ipv4uni",
                           "localAddrV6": "",
                           "remoteAS": "64813",
                           "addressType": "ipv4",
                           "peerAddrV4": "193.168.11.1",
                           "peerAddrV6": "",
                           "maxHop": 2
                       },
                       {
                           "localAddrV4": "173.20.9.7",
                           "afType": "ipv4uni",
                           "localAddrV6": "",
                           "remoteAS": "64813",
                           "addressType": "ipv4",
                           "peerAddrV4": "193.168.11.2",
                           "peerAddrV6": "",
                           "maxHop": 2
                       },
                       {
                           "localAddrV4": "",
                           "afType": "ipv6uni",
                           "localAddrV6": "fc01:187:C289::1",
                           "remoteAS": "64813",
                           "addressType": "ipv6",
                           "peerAddrV4": "",
                           "peerAddrV6": "fc01:187:C289::1",
                           "maxHop": 2
                       },
                       {
                           "localAddrV4": "",
                           "afType": "ipv6uni",
                           "localAddrV6": "fc01:187:C289::1",
                           "remoteAS": "64813",
                           "addressType": "ipv6",
                           "peerAddrV4": "",
                           "peerAddrV6": "fc01:187:C289::2",
                           "maxHop": 2
                       }
                   ],
                   "poolList": [
                       {
                           "poolName": "APN1IPv4_p",
                           "ipVersion": "IPv4"
                       },
                       {
                           "poolName": "APN1IPv6_p",
                           "ipVersion": "IPv6"
                       }
                   ],
                   "vpnName": "APN1_vpn",
               }
```

S809. The intent handler A calls intent functions of the intent handler X and the intent handler Y, to complete intent translation, verification, and activation in the DNN dedicated line provisioning scenario, and after completing configuration, enters an intent closed-loop control phase.

S810. The intent handler X finds that the network element SMF is abnormal, initiates an update request to the intent catalog, updates intent capability description information, and records SMF anomaly information.

S811. After updating the intent capability description information of the intent handler X, the intent catalog sends an update notification to a related subscriber.

S812. The intent handler A receives update information of the intent function DNNService network element SMF of the intent handler X from the intent catalog, learns of SMF anomaly through parsing, and further triggers a corresponding closed-loop policy.

For the DNN dedicated line provisioning intent, a plurality of network elements are involved, and an intent capability negotiation solution provided in this embodiment may be used to achieve an intent handler collaboration effect of a multi-vendor product, and the effect specifically includes the following.

In this embodiment, decoupling of intent handlers may be implemented. Each network element may come from a different vendor. A corresponding vendor needs to provide a corresponding intent function for processing. This embodiment describes how to perform intent negotiation, to select a correct vendor intent function for network element configuration, and avoid a case in which a change of a product version of a single intent function causes a change of other intent functions.

The intent capability description information is decomposed. This embodiment describes how to decompose intent capability description information corresponding to a northbound intent request into intent capability description information corresponding to each network element, and how to define the description information.

A capability of the intent catalog is cooperated with four intent phases. The four intent phases include intent translation, intent verification, intent activation, and intent closed-loop. This embodiment describes capabilities needed by the intent catalog and how the intent catalog is cooperated with the four intent phases to complete the DNN dedicated line provisioning.

It may be understood that, in the foregoing embodiments, the method and/or the step implemented by the intent catalog may also be implemented by a component (for example, a chip or a circuit) that may be used for the intent catalog. The method and/or the step implemented by the intent requester may also be implemented by a component (for example, a chip or a circuit) that can be used for the intent requester. The method and/or the step implemented by the target intent producer at the network layer may also be implemented by a component (for example, a chip or a circuit) that may be used for the target intent producer at the network layer. The method and/or the step implemented by the target intent producer at the element layer may also be implemented by a component (for example, a chip or a circuit) that may be used for the target intent producer at the element layer.

The foregoing mainly describes the solutions provided in embodiments of this application from a perspective of interaction between entities. Correspondingly, an embodiment of this application further provides an intent capability management apparatus. The intent capability management apparatus is configured to implement the foregoing methods. The intent capability management apparatus may be the intent catalog in the foregoing method embodiments, or may be a component that can be used for the intent catalog; or the intent capability management apparatus may be the intent requester in the foregoing method embodiments, or may be a component that can be used for the intent requester; or the intent capability management apparatus may be the target intent producer at the network layer in the foregoing method embodiments, or may be a component that can be used for the target intent producer at the network layer; or the intent capability management apparatus may be the target intent producer at the element layer in the foregoing method embodiment, or may be a component that can be used for the target intent producer at the element layer. It may be understood that, to implement the foregoing functions, the intent capability management apparatus includes a corresponding hardware structure and/or software module for performing the functions. A person skilled in the art should easily be aware that, based on units and algorithm steps in the examples described in embodiments disclosed in this specification, this application can be implemented through hardware or a combination of hardware and computer software. Whether a function is executed through hardware or hardware driven by computer software depends on particular applications and design constraint conditions of the technical solutions. A person skilled in the art may use different methods to implement the described functions for each particular application, but it should not be considered that the implementation exceeds the scope of this application.

In embodiments of this application, division into function modules may be performed on the intent capability management apparatus based on the foregoing method embodiments. For example, division into function modules may be performed based on corresponding functions, or two or more functions may be integrated into one processing unit. The integrated module may be implemented in a form of hardware, or may be implemented in a form of a software function module. It should be noted that, in embodiments of this application, module division is an example, and is merely a logical function division. In actual implementation, another division manner may be used.

Based on a same concept of the intent capability management method, this application further provides the following intent capability management apparatus.

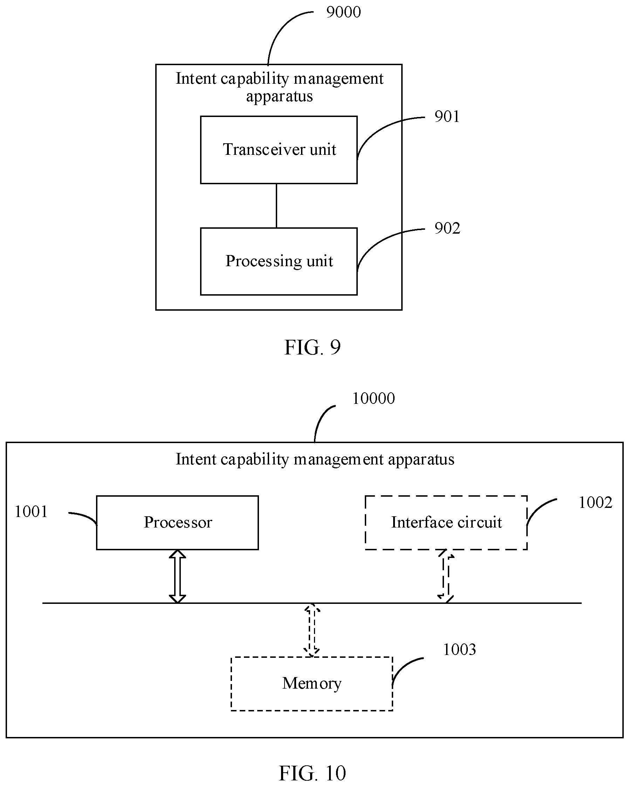

FIG. 9 is a diagram of a structure of an intent capability management apparatus according to an embodiment of this application. The intent capability management apparatus 9000 includes a transceiver unit 901 and a processing unit 902.

When the intent capability management apparatus is configured to implement the functions of the intent catalog in the foregoing method embodiments, the transceiver unit 901 is configured to perform the functions of the intent catalog in steps S502, S503, S505, and S506 in the embodiment shown in FIG. 5, or the transceiver unit 901 is configured to perform the functions of the intent target in steps S601 to S607, S609, S610, and S614 to S617 in the embodiment shown in FIG. 6A and FIG. 6B.

When the intent capability management apparatus is configured to implement functions of the intent requester in the foregoing method embodiments, the transceiver unit 901 is configured to perform functions of the intent requester in steps S501 to S504 in the embodiment shown in FIG. 5, or the transceiver unit 901 is configured to perform functions of the intent requester in steps S605 to S608 and S616 in the embodiment shown in FIG. 6A and FIG. 6B.

When the intent capability management apparatus is configured to implement functions of the target intent producer at the network layer in the foregoing method embodiments, the transceiver unit 901 is configured to perform functions of the target intent producer at the network layer in steps S504 to S507 in the embodiment shown in FIG. 5, or the transceiver unit 901 is configured to perform functions of the target intent producer at the network layer in steps S601, S602, S608 to S611, and S617 in the embodiment shown in FIG. 6A and FIG. 6B.

When the intent capability management apparatus is configured to implement functions of the target intent producer at the element layer in the foregoing method embodiments, the transceiver unit 901 is configured to perform functions of the target intent producer at the element layer in step S507 in the embodiment shown in FIG. 5, and the processing unit 902 is configured to perform step S508 in the embodiment shown in FIG. 5. Alternatively, the transceiver unit 901 is configured to perform functions of the target intent producer at the element layer in steps S603, S604, S611, S614, and S615 in the embodiment shown in FIG. 6A and FIG. 6B, and the processing unit 902 is configured to perform step S612 and step S613 in the embodiment shown in FIG. 6B.

For specific implementation of the transceiver unit 901 and the processing unit 902, refer to the descriptions in the foregoing method embodiments. Details are not described herein again.

FIG. 10 is a diagram of a structure of another intent capability management apparatus according to an embodiment of this application. The intent capability management apparatus 10000 includes a processor 1001, and may further include an interface circuit 1002 and a memory 1003 (represented by dashed lines in the figure). The processor 1001 is coupled to the interface circuit 1002. It may be understood that the interface circuit 1002 may be a transceiver or an input/output interface. The memory 1003 is configured to: store instructions executed by the processor 1001, store input data needed by the processor 1001 to run the instructions, or store data generated by running the instructions by the processor 1001. The processor 1001 is configured to implement a function of the processing unit 902 in the embodiment shown in FIG. 9, and the interface circuit 1002 is configured to implement a function of the transceiver unit 901 in the embodiment shown in FIG. 9.

When the intent capability management apparatus is a chip used in an intent catalog, the chip implements a function of the intent catalog in the foregoing method embodiments. The chip receives information from another module (like a radio frequency module or an antenna) in the intent catalog, where the information is sent by an intent requester, a target intent producer at a network layer, or a target intent producer at an element layer to the intent catalog; or the chip sends information to another module (like the radio frequency module or the antenna) in the intent catalog, where the information is sent by the intent catalog to the intent requester, the target intent producer at a network layer, or the target intent producer at the element layer.

When the intent capability management apparatus is a chip used in the intent requester, the chip implements a function of the intent requester in the foregoing method embodiments. The chip receives information from another module (like a radio frequency module or an antenna) in the intent requester, where the information is sent by the intent catalog, the target intent producer at the network layer, or the target intent producer at the element layer to the intent requester; or the chip sends information to another module (like the radio frequency module or the antenna) in the intent requester, where the information is sent by the intent requester to the intent catalog, the target intent producer at the network layer, or the target intent producer at the element layer.

When the intent capability management apparatus is a chip used in the target intent producer at the network layer, the chip implements a function of the target intent producer at the network layer in the foregoing method embodiments. The chip receives information from another module (like a radio frequency module or an antenna) in the target intent producer at the network layer, where the information is sent by the intent catalog, the intent requester, or the target intent producer at the element layer to the target intent producer at the network layer; or the chip sends information to another module (like the radio frequency module or the antenna) in the target intent producer at the network layer, where the information is sent by the target intent producer at the network layer to the intent catalog, the intent requester, or the target intent producer at the element layer.

When the intent capability management apparatus is a chip used in the target intent producer at the element layer, the chip implements a function of the target intent producer at the element layer in the foregoing method embodiments. The chip receives information from another module (like a radio frequency module or an antenna) in the target intent producer at the element layer, where the information is sent by the intent catalog, the intent requester, or the target intent producer at the network layer to the target intent producer at the element layer; or the chip sends information to another module (like the radio frequency module or the antenna) in the target intent producer at the element layer, where the information is sent by the target intent producer at the element layer to the intent catalog, the intent requester, or the target intent producer at the network layer.

In addition, it should be noted that the transceiver unit and/or the processing unit may be implemented by using a virtual module. For example, the processing unit may be implemented by using a software functional unit or a virtual apparatus, and the transceiver unit may be implemented by using a software function or a virtual apparatus. Alternatively, the processing unit or the transceiver unit may be implemented by using a physical apparatus. For example, if the apparatus is implemented by using a chip/chip circuit, the transceiver unit may be an input/output circuit and/or a communication interface, and performs an input operation (corresponding to the foregoing receiving operation) and an output operation (corresponding to the foregoing sending operation). The processing unit is an integrated processor, a microprocessor, or an integrated circuit.

Division into modules in this application is an example, is merely logical function division, and may be other division during actual implementation. In addition, function modules in examples of this application may be integrated into one processor, each of the modules may exist alone physically, or two or more modules may be integrated into one module. The integrated module may be implemented in a form of hardware, or may be implemented in a form of a software function module.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor or the like.

An embodiment of this application further provides a computer-readable storage medium. The computer-readable storage medium stores a computer program or instructions. When the computer program or the instructions are executed, the methods in the foregoing embodiments are implemented.

An embodiment of this application further provides a computer program product including instructions. When the instructions are run on a computer, the computer is caused to perform the methods in the foregoing embodiments.

An embodiment of this application further provides an intent capability management system, including the intent capability management apparatus.

An embodiment of this application further provides a circuit. The circuit is coupled to a memory, and the circuit is configured to perform the methods shown in the foregoing embodiments. The circuit may include a chip circuit.

It should be noted that one or more of the foregoing units or units may be implemented by software, hardware, or a combination of software and hardware. When any one of the foregoing modules or units is implemented by software, the software exists in a form of computer program instructions, and is stored in the memory. The processor may be configured to execute the program instructions and implement the foregoing method procedure.

In this application, the processor may be a general-purpose processor, a digital signal processor, an application-specific integrated circuit, a field programmable gate array or another programmable logic device, a discrete gate or a transistor logic device, or a discrete hardware component, and may implement or perform methods, steps, and logical block diagrams that are disclosed in this application. The general-purpose processor may be a microprocessor or any conventional processor or the like. The steps of the methods disclosed with reference to this application may be directly implemented by a hardware processor, or may be implemented by a combination of hardware and a software module in a processor.

The processor may be built in a system on chip (system on chip, SoC) or an ASIC, or may be an independent semiconductor chip. In addition to a core for executing software instructions to perform an operation or processing, the processor may further include a necessary hardware accelerator, for example, a field programmable gate array (field programmable gate array, FPGA), a programmable logic device (programmable logic device, PLD), or a logic circuit that implements a dedicated logic operation.

When the foregoing units or units are implemented by hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device. The hardware may run necessary software or does not depend on software to perform the foregoing method procedures.

Optionally, an embodiment of this application further provides a chip system, including at least one processor and an interface. The at least one processor is coupled to a memory through the interface. When the at least one processor runs a computer program or instructions in the memory, the chip system is caused to perform the method in any one of the foregoing method embodiments. Optionally, the chip system may include a chip, or may include a chip and another discrete device. This is not specifically limited in this embodiment of this application.

In this application, the memory may be a non-volatile memory, for example, a hard disk drive (hard disk drive, HDD) or a solid-state drive (solid-state drive, SSD), or may be a volatile memory (volatile memory), for example, a random-access memory (random-access memory, RAM). The memory is any other medium that can carry or store expected program code in a form of an instruction or a data structure and that can be accessed by a computer, but is not limited thereto. The memory in this application may alternatively be a circuit or any other apparatus that can implement a storage function, and is configured to store the program instructions and/or the data.

It should be understood that unless otherwise specified, "/" in descriptions of this application indicates an "or" relationship between associated objects. For example, A/B may indicate A or B. A and B may be singular or plural. In addition, in the descriptions of this application, "a plurality of" means two or more unless otherwise specified. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, the terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

All or some of the foregoing embodiments may be implemented by using software, hardware, firmware, or any combination thereof. When software program is used to implement embodiments, embodiments may be implemented completely or partially in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a digital versatile disc (digital versatile disc, DVD)), a semiconductor medium (for example, a solid-state drive (solid-state drive, SSD)), or the like.

Although this application is described with reference to embodiments, in a process of implementing this application that claims protection, a person skilled in the art may understand and implement another variation of disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

In the foregoing embodiments, descriptions of all embodiments have respective focuses. For a part that is not described in detail in an embodiment, refer to related descriptions in other embodiments.

Components in the apparatus in embodiments of this application may be combined, divided, and deleted based on an actual requirement. A person skilled in the art may combine different embodiments or features of different embodiments described in this specification.

The foregoing embodiments are merely intended for describing the technical solutions of this application, rather than limiting this application. Although this application is described in detail with reference to the foregoing embodiments, a person of ordinary skilled in the art should understand that modifications may still be made to the technical solutions described in the foregoing embodiments or equivalent replacements may be made to some technical features, and such modifications or replacements do not cause the essence of the corresponding technical solutions to depart from the scope of embodiments of this application.

In this application, without a logical contradiction, mutual reference may be made between examples. For example, mutual reference may be made between methods and/or terms in method embodiments, mutual reference may be made between functions and/or terms in apparatus embodiments, and mutual reference may be made between functions and/or terms in apparatus examples and method examples.

It is clear that a person skilled in the art may make various modifications and variations to this application without departing from the scope of this application. This application is intended to cover these modifications and variations of this application provided that the modifications and variations fall within the scope of protection defined by the following claims and their equivalent technologies thereof.

## Claims

1. An intent capability management method, wherein the method comprises:
receiving a subscription request from an intent requester or an intent producer at a network layer, wherein the subscription request is used to subscribe to intent capability description information of a target intent producer at a network layer or an element layer related to a first service; and
sending a subscription response to the intent requester or the intent producer at the network layer, wherein the subscription response comprises the intent capability description information of the target intent producer at the network layer or the element layer.

2. The method according to claim 1, wherein the method further comprises:
receiving an intent registration request from at least one intent producer at the network layer or the element layer, wherein the intent registration request comprises intent capability description information of the at least one intent producer at the network layer or the element layer; and
sending an intent registration response to the at least one intent producer at the network layer or the element layer.

3. The method according to claim 1 or 2, wherein the method further comprises:
receiving an update request from the target intent producer at the element layer, wherein the update request is used to request to update the intent capability description information of the target intent producer at the network layer or the element layer; and
sending an update response to the target intent producer at the element layer.

4. The method according to claim 3, wherein the method further comprises:
sending a subscription update notification to the intent requester or the intent producer at the network layer, wherein the subscription update notification comprises updated intent capability description information of the target intent producer at the network layer or the element layer.

5. The method according to any one of claims 1 to 4, wherein the intent capability description information comprises at least one of the following: an intent handler role, a processing capability of an intent function, a status of an intent function module, a transmission format of an intent information model, a format of the intent information model, an intent interface type, an access address of the intent function module, an intent function layer, a supported domain, a name of the intent function, metadata of the intent function, the intent information model, an intent input, and an intent output.

6. An intent capability management method, wherein the method comprises:
receiving an intent request, wherein the intent request comprises a first intention, and the first intention is a request for performing a first service;
sending a subscription request to an intent catalog, wherein the subscription request is used to subscribe to intent capability description information of a target intent producer at a network layer related to the first service;
receiving a subscription response, wherein the subscription response comprises the intent capability description information of the target intent producer at the network layer; and
sending a first call indication to the target intent producer at the network layer, wherein the first call indication indicates to call the target intent producer at the network layer.

7. The method according to claim 6, wherein the intent capability description information comprises at least one of the following: an intent handler role, a processing capability of an intent function, a status of an intent function module, a transmission format of an intent information model, a format of the intent information model, an intent interface type, an access address of the intent function module, an intent function layer, a supported domain, a name of the intent function, metadata of the intent function, the intent information model, an intent input, and an intent output.

8. An intent capability management method, wherein the method comprises:
receiving a first call indication from an intent requester, wherein the first call indication indicates to call a target intent producer at a network layer related to a first service;
sending a subscription request to an intent catalog based on the first call indication, wherein the subscription request is used to subscribe to intent capability description information of at least one target intent producer at an element layer related to the first service;
receiving a subscription response from the intent catalog, wherein the subscription response comprises the intent capability description information of the at least one target intent producer at the element layer; and
sending a second call indication to the at least one target intent producer at the element layer, wherein the second call indication indicates to call the at least one target intent producer at the element layer.

9. The method according to claim 8, wherein the method further comprises:
sending an intent registration request to the intent catalog, wherein the intent registration request comprises intent capability description information of the target intent producer at the network layer; and
receiving an intent registration response from the intent catalog.

10. The method according to claim 8 or 9, wherein the method further comprises:
receiving a subscription update notification from the intent catalog, wherein the subscription update notification comprises updated intent capability description information of the target intent producer at the element layer.

11. The method according to any one of claims 8 to 10, wherein the intent capability description information comprises at least one of the following: an intent handler role, a processing capability of an intent function, a status of an intent function module, a transmission format of an intent information model, a format of the intent information model, an intent interface type, an access address of the intent function module, an intent function layer, a supported domain, a name of the intent function, metadata of the intent function, the intent information model, an intent input, and an intent output.

12. An intent capability management method, wherein the method comprises:
receiving a second call indication from an intent producer at a network layer, wherein the second call indication indicates to call at least one target intent producer at an element layer; and
configuring, based on the second call indication, a network element related to a first service.

13. The method according to claim 12, wherein the method further comprises:
sending an intent registration request to an intent catalog, wherein the intent registration request comprises intent capability description information of the target intent producer at the element layer; and
receiving an intent registration response from the intent catalog.

14. The method according to claim 13, wherein the method further comprises:
determining that intent capability description information of the network element is updated;
sending an update request to the intent catalog, wherein the update request is used to request to update the intent capability description information of the target intent producer at the element layer; and
receiving an update response from the intent catalog.

15. The method according to any one of claims 12 to 14, wherein the intent capability description information comprises at least one of the following: an intent handler role, a processing capability of an intent function, a status of an intent function module, a transmission format of an intent information model, a format of the intent information model, an intent interface type, an access address of the intent function module, an intent function layer, a supported domain, a name of the intent function, metadata of the intent function, the intent information model, an intent input, and an intent output.

16. An intent capability management method, wherein the method comprises:
receiving, by an intent requester, an intent request, wherein the intent request comprises a first intention, and the first intention is a request for performing a first service;
sending, by the intent requester, a first subscription request to an intent catalog, wherein the first subscription request is used to subscribe to intent capability description information of a target intent producer at a network layer related to the first service;
sending, by the intent catalog, a first subscription response to the intent requester, wherein the first subscription response comprises the intent capability description information of the target intent producer at the network layer;
sending, by the intent requester, a first call indication to the target intent producer at the network layer, wherein the first call indication indicates to call the target intent producer at the network layer;
sending, by the target intent producer at the network layer, a second subscription request to the intent catalog based on the first call indication, wherein the second subscription request is used to subscribe to intent capability description information of at least one target intent producer at an element layer related to the first service;
sending, by the intent catalog, a second subscription response to the intent producer at the network layer, wherein the second subscription response comprises the intent capability description information of the at least one target intent producer at the element layer;
sending, by the intent producer at the network layer, a second call indication to the at least one target intent producer at the element layer, wherein the second call indication indicates to call the at least one target intent producer at the element layer; and
configuring, by the at least one target intent producer at the element layer based on the second call indication, a network element related to the first service.

17. An intent capability management apparatus, wherein the apparatus comprises a unit configured to perform the method according to any one of claims 1 to 15.

18. An intent capability management system, comprising an intent requester, an intent catalog, a target intent producer at a network layer, and at least one target intent producer at an element layer, wherein the intent requester is configured to perform the method according to any one of claims 1 to 5, the intent catalog is configured to perform the method according to claim 6 or 7, the target intent producer at the network layer is configured to perform the method according to any one of claims 8 to 11, and the at least one target intent producer at the element layer is configured to perform the method according to any one of claims 12 to 15.

19. A computer-readable storage medium, wherein the storage medium stores a computer program or instructions, and when the computer program or the instructions are executed by a communication apparatus, the method according to any one of claims 1 to 15 is implemented.

20. A computer program product, wherein the computer program product comprises related program instructions, and when the related program instructions are executed, the method according to any one of claims 1 to 15 is implemented.
